# EUROPEAN PATENT APPLICATION

(11) **EP 4 596 353 A1**
(43) Date of publication of application: **06.08.2025**
(21) Application number: 23873059.2
(22) Date of filing: 26.09.2023
(51) Int. Cl.: B60W 50/023, B60W 50/02, B60W 50/04, B60W 50/14, B60W 60/00

(54) **SIGNAL PROCESSING DEVICE AND VEHICLE DISPLAY DEVICE INCLUDING SAME**

(30) Priority: 27.09.2022 KR 20220122192
(71) Applicant: LG Electronics Inc., Yeongdeungpo-gu Seoul 07336 (KR)
(72) Inventor: LEE, Dongkyu, Seoul 06772 (KR); PARK, Namyong, Seoul 06772 (KR); LEE, Chulhee, Seoul 06772 (KR); YOON, Taesuk, Seoul 06772 (KR)
(74) Representative: Vossius & Partner Patentanwälte Rechtsanwälte mbB
(86) International application number: PCT/KR2023/014736
(87) International publication number: WO 2024/071944

(57) **Abstract**

A signal processing device and a vehicle display apparatus including the same according to an embodiment of the present disclosure include a plurality of processor cores, wherein a first processor core among the plurality of processor cores is configured to execute a first application corresponding to a first safety level or a microservice corresponding to the first application, perform mode switching with a second processor core among the plurality of processor cores, and execute a second application corresponding to a second safety level higher than the first safety level or a microservice corresponding to the second application. Accordingly, the safety level of the processor core can be increased.

## Description

### BACKGROUND

### 1. Technical Field

The present disclosure relates to a signal processing device and a vehicle display apparatus including the same, and more particularly to a signal processing device capable of raising a safety level of a processor core, and a vehicle display apparatus including the signal processing device.

### 2. Description of the Related Art

A vehicle is a machine that allows a user to move in a desired direction. A typical example of the vehicle is an automobile.

Meanwhile, a signal processing device for vehicles is mounted in the vehicle for convenience of users who use the vehicle.

The signal processing device in the vehicle receives sensor data from various vehicle internal sensor devices and processes the sensor data.

Meanwhile, as the type and number of sensors mounted in the vehicle increase for the Advanced Driver Assistance System (ADAS) or autonomous driving, etc., the amount of data required to be processed also increases.

Meanwhile, the ADAS or autonomous driving requires data processing to be performed according to the Automotive SIL (ASIL), such that data processing is required to be performed based on safety levels.

Meanwhile, in the case of operating a plurality of processor cores by classifying the processor cores according to safety levels, there is a problem in that it is difficult to perform efficient data processing or efficient signal processing.

### SUMMARY

It is an objective of the present disclosure to provide a signal processing device capable of raising a safety level of a processor core, and a vehicle display apparatus including the signal processing device.

It is another objective of the present disclosure to efficiently perform data processing based on an increased safety level.

It is yet another objective of the present disclosure to provide a signal processing device capable of efficiently perform data processing by using a microservice, and a vehicle display apparatus including the signal processing device.

In accordance with an aspect of the present disclosure, the above and other objectives can be accomplished by providing a signal processing device and a vehicle display apparatus including the same, which include a plurality of processor cores, wherein a first processor core among the plurality of processor cores is configured to execute a first application corresponding to a first safety level or a microservice corresponding to the first application, perform mode switching with a second processor core among the plurality of processor cores, and execute a second application corresponding to a second safety level higher than the first safety level or a microservice corresponding to the second application.

Meanwhile, the first processor core can be configured to operate based on the first safety level before the mode switching, and to operate based on the second safety level after the mode switching.

Meanwhile, after the mode switching, the first processor core among the plurality of processor cores can be configured to continuously execute the first application corresponding to the first safety level or the microservice corresponding to the first application.

Meanwhile, after the mode switching, the first processor core among the plurality of processor cores can be configured to stop executing the first application corresponding to the first safety level or the microservice corresponding to the first application.

Meanwhile, some of the plurality of processor cores can be configured to operate based on a hypervisor, wherein the hypervisor can be configured to execute a plurality of virtual machines.

Meanwhile, a first virtual machine among the plurality of virtual machines can be configured to execute the first application corresponding to the first safety level or the microservice corresponding to the first application before the mode switching, and in response to a request for executing the second application corresponding to the second safety level or the microservice corresponding to the second application, the first virtual machine can be configured to perform mode switching and execute the second application or the microservice corresponding to the second application.

Meanwhile, a first virtual machine among the plurality of virtual machines can be configured to execute the first application or the microservice corresponding to the first application on an operating system corresponding to the second safety level before the mode switching, and in response to a request for executing the second application corresponding to the second safety level or the microservice corresponding to the second application, the first virtual machine can be configured to perform mode switching and execute the second application or the microservice corresponding to the second application on the operating system corresponding to the second safety level.

Meanwhile, a second virtual machine among the plurality of virtual machines can be configured to execute a third application corresponding to the first safety level or a microservice corresponding to the third application on an operating system corresponding to the first safety level.

Meanwhile, a third virtual machine among the plurality of virtual machines can be configured to execute, on an operating system corresponding to a third safety level lower than the first safety level, a fourth application corresponding to the third safety level or a microservice corresponding to the fourth application.

Meanwhile, another processor core among the plurality of processor cores can be configured to execute an application corresponding to the second safety level or a microservice corresponding to the application corresponding to the second safety level, without executing the hypervisor.

Meanwhile, the first processor core among the plurality of processor cores can be configured to execute the first application corresponding to the first safety level or the microservice corresponding to the first application, and in response to a request for installing and executing the second application or the microservice corresponding to the second application, the first processor core can be configured to perform mode switching, change a setting, and upon restarting, install and execute the second application or the microservice corresponding to the second application.

Meanwhile, in response to a request for uninstalling the second application or the microservice corresponding to the second application, the first processor core among the plurality of processor cores can be configured to restart after uninstalling the second application or the microservice corresponding to the second application.

Meanwhile, the signal processing device can further include an interface configured to transmit mode switching information of the first processor core to at least one zonal signal processing device.

Meanwhile, the interface can be configured to transmit result data of the microservice corresponding to the second application to a processor core, having a safety level lower than or equal to the second safety level, in a first zonal signal processing device.

Meanwhile, the interface can be configured to receive result data of a microservice corresponding to a safety level higher than or equal to the second safety level, which is executed in the first zonal signal processing device, and to transmit the result data to the first processor core.

Meanwhile, the first processor core among the plurality of processor cores can be configured to execute a hypervisor, wherein the hypervisor can be configured to execute an application or microservice corresponding to the second safety level, and to execute the plurality of virtual machines on the hypervisor.

Meanwhile, the first processor core among the plurality of processor cores can be configured to execute a hypervisor, wherein the hypervisor can be configured to execute the plurality of virtual machines on the hypervisor.

A signal processing device and a vehicle display apparatus including the same according to another embodiment of the present disclosure include a plurality of processor cores, wherein at least some of the plurality of processor cores are configured to execute a hypervisor, wherein the hypervisor is configured to execute a plurality of virtual machines, wherein a first virtual machine among the plurality of virtual machines is configured to execute a first application corresponding to a first safety level or a microservice corresponding to the first application before mode switching, and in response to a request for executing a second application corresponding to a second safety level higher than the first safety level or a microservice corresponding to the second application, the first virtual machine is configured to perform the mode switching and execute the second application or the microservice corresponding to the second application.

Meanwhile, in response to a request for installing and executing the second application or the microservice corresponding to the second application, the first virtual machine is configured to perform the mode switching, change a setting, and upon restarting, install and execute the second application or the microservice corresponding to the second application.

### EFFECTS OF THE DISCLOSURE

A signal processing device and a vehicle display apparatus including the same according to an embodiment of the present disclosure include a plurality of processor cores, wherein a first processor core among the plurality of processor cores is configured to execute a first application corresponding to a first safety level or a microservice corresponding to the first application, perform mode switching with a second processor core among the plurality of processor cores, and execute a second application corresponding to a second safety level higher than the first safety level or a microservice corresponding to the second application. Accordingly, the safety level of the processor core can be increased. Further, data processing can be efficiently performed based on the increased safety level. Particularly, data processing can be efficiently performed using the microservices.

Meanwhile, the first processor core can be configured to operate based on the first safety level before the mode switching, and to operate based on the second safety level after the mode switching. Accordingly, data processing can be efficiently performed based on the increased safety level.

Meanwhile, after the mode switching, the first processor core among the plurality of processor cores can be configured to continuously execute the first application corresponding to the first safety level or the microservice corresponding to the first application. Accordingly, data processing can be efficiently performed.

Meanwhile, after the mode switching, the first processor core among the plurality of processor cores can be configured to stop executing the first application corresponding to the first safety level or the microservice corresponding to the first application. Accordingly, data processing can be efficiently performed according to the increased safety level.

Meanwhile, some of the plurality of processor cores can be configured to operate based on a hypervisor, wherein the hypervisor can be configured to execute a plurality of virtual machines. Accordingly, data processing can be efficiently performed.

Meanwhile, a first virtual machine among the plurality of virtual machines can be configured to execute the first application corresponding to the first safety level or the microservice corresponding to the first application before the mode switching, and in response to a request for executing the second application corresponding to the second safety level or the microservice corresponding to the second application, the first virtual machine can be configured to perform mode switching and execute the second application or the microservice corresponding to the second application. Accordingly, data processing can be efficiently performed using the second application or the microservice corresponding to the second application.

Meanwhile, a first virtual machine among the plurality of virtual machines can be configured to execute the first application or the microservice corresponding to the first application on an operating system corresponding to the second safety level before the mode switching, and in response to a request for executing the second application corresponding to the second safety level or the microservice corresponding to the second application, the first virtual machine can be configured to perform mode switching and execute the second application or the microservice corresponding to the second application on the operating system corresponding to the second safety level. Accordingly, data processing can be efficiently performed using the second application or the microservice corresponding to the second application.

Meanwhile, a second virtual machine among the plurality of virtual machines can be configured to execute a third application corresponding to the first safety level or a microservice corresponding to the third application on an operating system corresponding to the first safety level. Accordingly, the application or microservice corresponding to the first safety level can be stably executed.

Meanwhile, a third virtual machine among the plurality of virtual machines can be configured to execute, on an operating system corresponding to a third safety level lower than the first safety level, a fourth application corresponding to the third safety level or a microservice corresponding to the fourth application. Accordingly, the application or microservice corresponding to the third safety level can be stably executed.

Meanwhile, another processor core among the plurality of processor cores can be configured to execute an application corresponding to the second safety level or a microservice corresponding to the application corresponding to the second safety level, without executing the hypervisor. Accordingly, the application or microservice corresponding to the second safety level can be stably executed.

Meanwhile, the first processor core among the plurality of processor cores can be configured to execute the first application corresponding to the first safety level or the microservice corresponding to the first application, and in response to a request for installing and executing the second application or the microservice corresponding to the second application, the first processor core can be configured to perform mode switching, change a setting, and upon restarting, install and execute the second application or the microservice corresponding to the second application. Accordingly, data processing can be efficiently performed using the second application or the microservice corresponding to the second application.

Meanwhile, in response to a request for uninstalling the second application or the microservice corresponding to the second application, the first processor core among the plurality of processor cores can be configured to restart after uninstalling the second application or the microservice corresponding to the second application. Accordingly, the safety level of the processor core can be decreased.

Meanwhile, the signal processing device can further include an interface configured to transmit mode switching information of the first processor core to at least one zonal signal processing device. Accordingly, data exchange with the zonal signal processing device can be performed.

Meanwhile, the interface can be configured to transmit result data of the microservice corresponding to the second application to a processor core, having a safety level lower than or equal to the second safety level, in a first zonal signal processing device. Accordingly, data processing can be efficiently performed using the zonal signal processing device.

Meanwhile, the interface can be configured to receive result data of a microservice corresponding to a safety level higher than or equal to the second safety level, which is executed in the first zonal signal processing device, and to transmit the result data to the first processor core. Accordingly, data processing can be efficiently performed using the first zonal signal processing device.

Meanwhile, the first processor core among the plurality of processor cores can be configured to execute a hypervisor, wherein the hypervisor can be configured to execute an application or microservice corresponding to the second safety level, and to execute the plurality of virtual machines on the hypervisor. Accordingly, data processing can be efficiently performed using the plurality of virtual machines.

Meanwhile, the first processor core among the plurality of processor cores can be configured to execute a hypervisor, wherein the hypervisor can be configured to execute the plurality of virtual machines on the hypervisor. Accordingly, data processing can be efficiently performed using the plurality of virtual machines.

A signal processing device and a vehicle display apparatus including the same according to another embodiment of the present disclosure include a plurality of processor cores, wherein at least some of the plurality of processor cores are configured to execute a hypervisor, wherein the hypervisor is configured to execute a plurality of virtual machines, wherein a first virtual machine among the plurality of virtual machines is configured to execute a first application corresponding to a first safety level or a microservice corresponding to the first application before mode switching, and in response to a request for executing a second application corresponding to a second safety level higher than the first safety level or a microservice corresponding to the second application, the first virtual machine is configured to perform the mode switching and execute the second application or the microservice corresponding to the second application. Accordingly, the safety level of the processor core can be increased. Further, data processing can be efficiently performed based on the increased safety level. Particularly, data processing can be efficiently performed using the microservices.

Meanwhile, in response to a request for installing and executing the second application or the microservice corresponding to the second application, the first virtual machine is configured to perform the mode switching, change a setting, and upon restarting, install and execute the second application or the microservice corresponding to the second application. Accordingly, data processing can be efficiently performed using the second application or the microservice corresponding to the second application.

### BRIEF DESCRIPTION OF THE DRAWINGS

FIG. 1 is a diagram illustrating an example of the exterior and interior of a vehicle;
FIGS. 2A to 2C are diagrams illustrating various architectures of a vehicle communication gateway;
FIG. 3A is a diagram illustrating an example of a vehicle display apparatus in a vehicle;
FIG. 3B is a diagram illustrating another example of a vehicle display apparatus in a vehicle;
FIG. 4 is an internal block diagram illustrating an example of the vehicle display apparatus of FIG. 3B;
FIGS. 5A to 5D are diagrams illustrating various examples of a vehicle display apparatus;
FIG. 6 is a block diagram illustrating an example of a vehicle display apparatus according to an embodiment of the present disclosure;
FIG. 7A is a diagram referred to in the description of a signal processing device associated with the present disclosure;
FIG. 7B is a diagram illustrating an example of executing microservices according to an embodiment of the present disclosure;
FIG. 8 is an exemplary internal block diagram of a signal processing device according to an embodiment of the present disclosure;
FIGS. 9A and 9B are exemplary internal block diagrams of a signal processing device before and after mode switching, according to an embodiment of the present disclosure;
FIG. 10 is a flowchart illustrating a method of operating a signal processing device according to an embodiment of the present disclosure; and
FIGS. 11A to 21 are diagrams referred to in the description of operation of FIG. 10.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

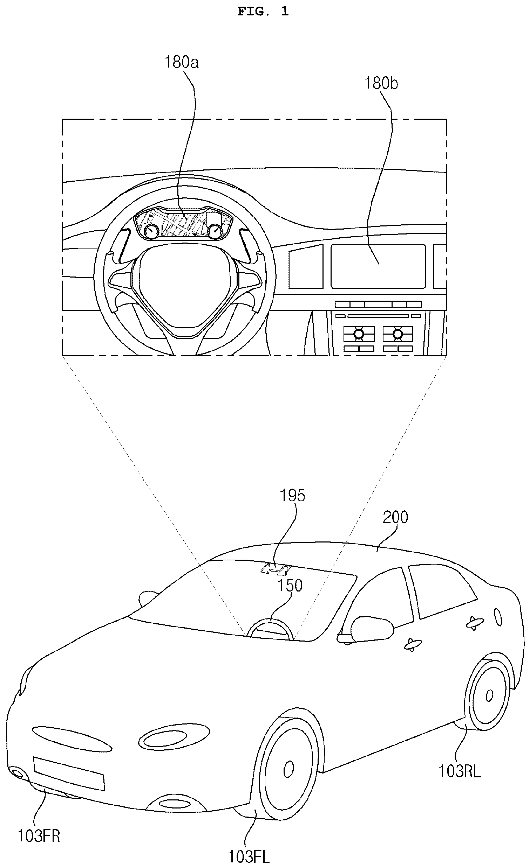

FIG. 1 is a diagram illustrating an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) can also be used.

Meanwhile, the audio video navigation (AVN) display 180b can also be called a center information display.

Meanwhile, the vehicle 200 described in this specification can be a concept including all of a vehicle having an engine as a power source, a hybrid vehicle having an engine and an electric motor as a power source, and an electric vehicle having an electric motor as a power source.

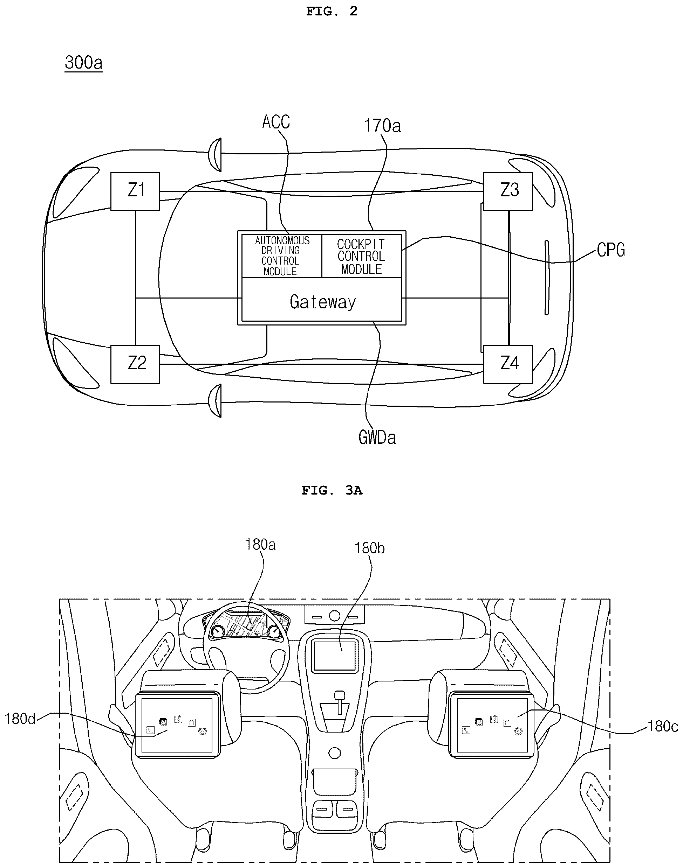

FIGS. 2 to 2C are diagrams illustrating various architectures of a vehicle communication gateway.

First, FIG. 2 is a diagram illustrating a first architecture of a vehicle communication gateway.

Referring to FIG. 2, a first architecture 300a can correspond to a zone-based architecture.

Accordingly, vehicle internal sensor devices and processors can be mounted in each of a plurality of zones Z1 to Z4, and a signal processing device 170a including a vehicle communication gateway GWDa can be disposed at the center of the plurality of zones Z1 to Z4.

Meanwhile, the signal processing device 170a can further include an autonomous driving control module ACC, a cockpit control module CPG, etc., in addition to the vehicle communication gateway GWDa.

The vehicle communication gateway GWDa in the signal processing device 170a can be a High Performance Computing (HPC) gateway.

That is, as an integrated HPC gateway, the signal processing device 170a of FIG. 2 can exchange data with an external communication module (not shown) or processors (not shown) in the plurality of zones Z1 to Z4.

FIG. 3A is a diagram illustrating an example of a vehicle display apparatus in a vehicle.

Referring to the figure, a cluster display 180a, an audio video navigation (AVN) display 180b, rear seat entertainment displays 180c and 180d, and a rear-view mirror display (not shown) can be mounted in the vehicle.

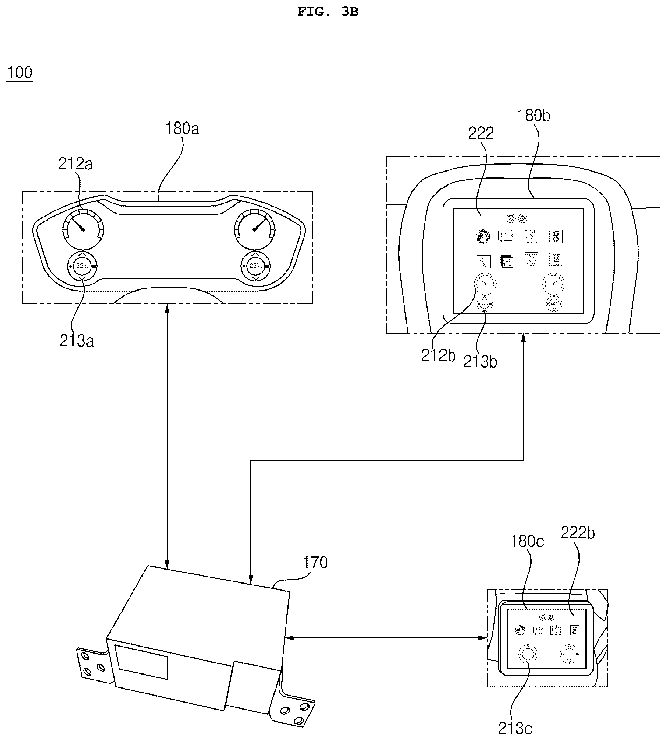

FIG. 3B is a diagram illustrating another example of a vehicle display apparatus in a vehicle.

A vehicle display apparatus 100 according to the embodiment of the present disclosure can include a plurality of displays 180a and 180b and a signal processing device 170 configured to perform signal processing in order to display images and information on the plurality of displays 180a and 180b, and to output an image signal to at least one of the displays 180a and 180b.

The first display 180a, which is one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

The signal processing device 170 can have a processor 175 provided therein, and first to third virtual machines (not shown) can be executed by a hypervisor 505 in the processor 175.

The second virtual machine (not shown) can be operated for the first display 180a, and the third virtual machine (not shown) can be operated for the second display 180b.

Meanwhile, the first virtual machine (not shown) in the processor 175 can be configured to set a shared memory 508 based on the hypervisor 505 for transmission of the same data to the second virtual machine (not shown) and the third virtual machine (not shown). Consequently, the first display 180a and the second display 180b in the vehicle can display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle can divide and process data.

Meanwhile, the first virtual machine (not shown) in the processor 175 can receive and process wheel speed sensor data of the vehicle, and can transmit the processed wheel speed sensor data to at least one of the second virtual machine (not shown) or the third virtual machine (not shown). Consequently, at least one virtual machine can share the wheel speed sensor data of the vehicle.

Meanwhile, the vehicle display apparatus 100 according to the embodiment of the present disclosure can further include a rear seat entertainment (RSE) display 180c configured to display driving state information, simple navigation information, various kinds of entertainment information, or an image.

The signal processing device 170 can further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c can be operated based on a Linux Operating System (OS), and others can be operated based on a Web Operating System (OS).

The signal processing device 170 according to the embodiment of the present disclosure can be configured to display the same information or the same images in a synchronized state on the displays 180a to 180c to be operated under various operating systems.

Meanwhile, FIG. 3B illustrates an example in which a vehicle speed indicator 212a and a vehicle internal temperature indicator 213a are displayed on a first display 180a, a home screen 222 including a plurality of applications, a vehicle speed indicator 212b, and a vehicle internal temperature indicator 213b is displayed on a second display 180b, and a second home screen 222b including a plurality of applications and a vehicle internal temperature indicator 213c is displayed on a third display 180c.

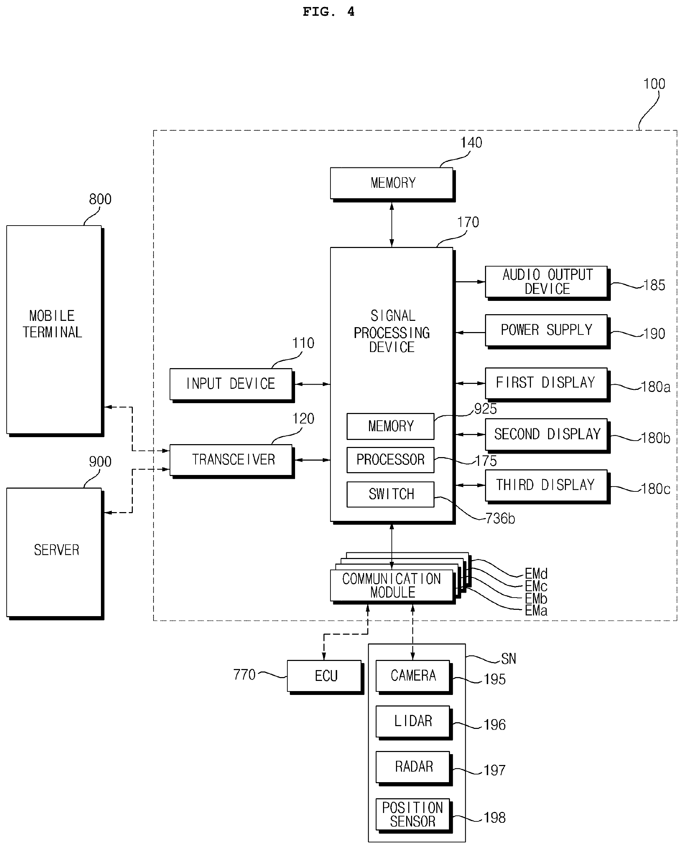

FIG. 4 is an internal block diagram illustrating an example of the vehicle display apparatus of FIG. 3B.

Referring to FIG. 4, a vehicle display apparatus 100 according to an embodiment of the present disclosure can include an input device 110, a transceiver 120 for communication with an external device, a plurality of communication modules EMa to EMd for internal communication, a memory 140, the signal processing device 170, a plurality of displays 180a to 180c, an audio output device 185, and a power supply 190.

The plurality of communication modules EMa to EMd can be disposed in a plurality of zones Z1 to Z4, respectively, in FIG. 2.

Meanwhile, the signal processing device 170 can be provided therein with a communication switch 736b for data communication with the respective communication modules EM1 to EM4.

The respective communication modules EM1 to EM4 can perform data communication with the plurality of sensor devices SN or the ECU 770.

Meanwhile, a plurality of sensor devices SN can include a camera 195, a lidar sensor 196, a radar sensor 197, or a position sensor 198.

The input device 110 can include a physical button or pad for button input or touch input.

Meanwhile, the input device 110 can include a microphone (not shown) for user voice input.

The transceiver 120 can wirelessly exchange data with a mobile terminal 800 or a server 900.

In particular, the transceiver 120 can wirelessly exchange data with a mobile terminal of a vehicle driver. Any of various data communication schemes, such as Bluetooth, Wi-Fi, WIFI Direct, and APIX, can be used as a wireless data communication scheme.

The transceiver 120 can receive weather information and road traffic state information, such as Transport Protocol Experts Group (TPEG) information, from a mobile terminal 800 or a server 900. To this end, the transceiver 120 can include a mobile communication module (not shown).

The plurality of communication modules EM1 to EM4 can receive sensor data and the like from the electronic control unit (ECU) 770 or the sensor device SN or a zonal signal processing device 170Z, and can transmit the received sensor data to the signal processing device 170.

Here, the sensor data can include at least one of vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, or vehicle internal humidity data.

The sensor data can be acquired from a heading sensor, a yaw sensor, a gyro sensor, a position sensor, a vehicle forward/backward movement sensor, a wheel sensor, a vehicle speed sensor, a car body inclination sensor, a battery sensor, a fuel sensor, a tire sensor, a steering-wheel-rotation-based steering sensor, a vehicle internal temperature sensor, or a vehicle internal humidity sensor.

Meanwhile, the position module can include a GPS module configured to receive GPS information or a position sensor 198.

Meanwhile, at least one of the plurality of communication modules EM1 to EM4 can transmit position information data sensed by the GPS module or the position sensor 198 to the signal processing device 170.

Meanwhile, at least one of the plurality of communication modules EM1 to EM4 can receive front image data of the vehicle, side-of-vehicle image data, rear image data of the vehicle, and obstacle-around-vehicle distance information from the camera 195, the lidar sensor 196, or the radar sensor 197, etc., and can transmit the received information to the signal processing device 170.

The memory 140 can store various data necessary for overall operation of the vehicle display apparatus 100, such as programs for processing or control of the signal processing device 170.

For example, the memory 140 can store data about the hypervisor and first to third virtual machines executed by the hypervisor in the processor 175.

The audio output device 185 can convert an electrical signal from the signal processing device 170 into an audio signal, and can output the audio signal. To this end, the audio output device 185 can include a speaker.

The power supply 190 can supply power necessary to operate components under control of the signal processing device 170. In particular, the power supply 190 can receive power from a battery in the vehicle.

The signal processing device 170 can control the overall operation of each device in the vehicle display apparatus 100.

For example, the signal processing device 170 can include a processor 175 configured to perform signal processing for the vehicle displays 180a and 180b.

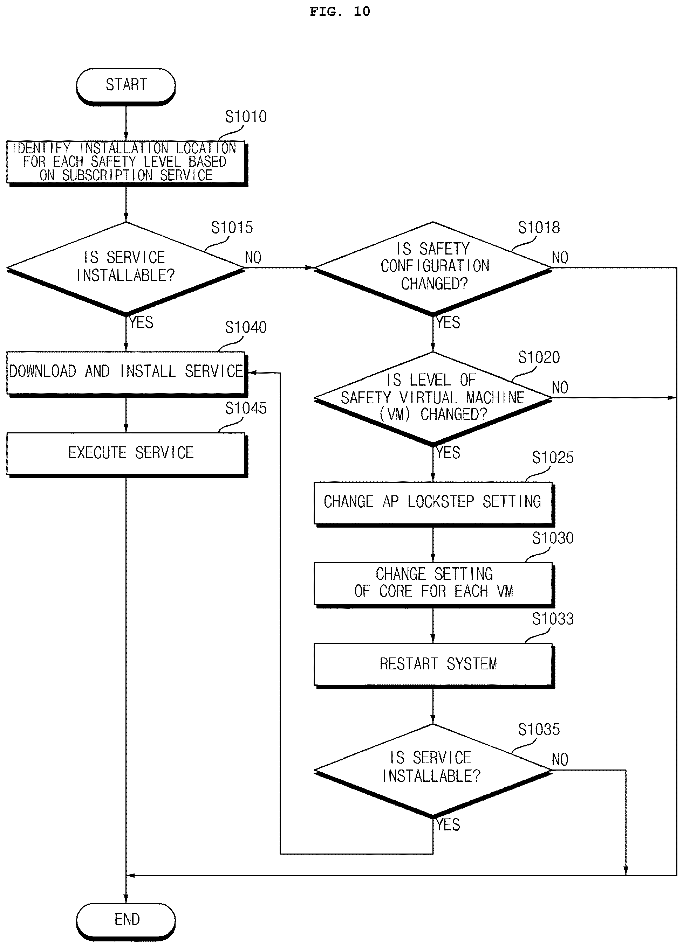

The processor 175 can execute the first to third virtual machines (not shown) on the hypervisor 505 (see FIG. 10) in the processor 175.

Among the first to third virtual machines (not shown) (see FIG. 10), the first virtual machine (not shown) can be called a server virtual machine, and the second and third virtual machines (not shown) and (not shown) can be called guest virtual machines.

For example, the first virtual machine (not shown) in the processor 175 can receive sensor data from the plurality of sensor devices, such as vehicle sensor data, position information data, camera image data, audio data, or touch input data, and can process and output the received sensor data.

As described above, the first virtual machine (not shown) can process most of the data, whereby 1:N data sharing can be achieved.

In another example, the first virtual machine (not shown) can directly receive and process CAN data, Ethernet data, audio data, radio data, USB data, and wireless communication data for the second and third virtual machines (not shown).

Further, the first virtual machine (not shown) can transmit the processed data to the second and third virtual machines (not shown).

Accordingly, only the first virtual machine (not shown), among the first to third virtual machines (not shown), can receive sensor data from the plurality of sensor devices, communication data, or external input data, and can perform signal processing, whereby load in signal processing by the other virtual machines can be reduced and 1:N data communication can be achieved, and therefore synchronization at the time of data sharing can be achieved.

Meanwhile, the first virtual machine (not shown) can be configured to write data in the shared memory 508, whereby the second virtual machine (not shown) and the third virtual machine (not shown) share the same data.

For example, the first virtual machine (not shown) can be configured to write vehicle sensor data, the position information data, the camera image data, or the touch input data in the shared memory 508, whereby the second virtual machine (not shown) and the third virtual machine (not shown) share the same data. Consequently, 1:N data sharing can be achieved.

Eventually, the first virtual machine (not shown) can process most of the data, whereby 1:N data sharing can be achieved.

Meanwhile, the first virtual machine (not shown) in the processor 175 can be configured to set the shared memory 508 based on the hypervisor 505 in order to transmit the same data to the second virtual machine (not shown) and the third virtual machine (not shown).

Meanwhile, the signal processing device 170 can process various signals, such as an audio signal, an image signal, and a data signal. To this end, the signal processing device 170 can be implemented in the form of a system on chip (SOC).

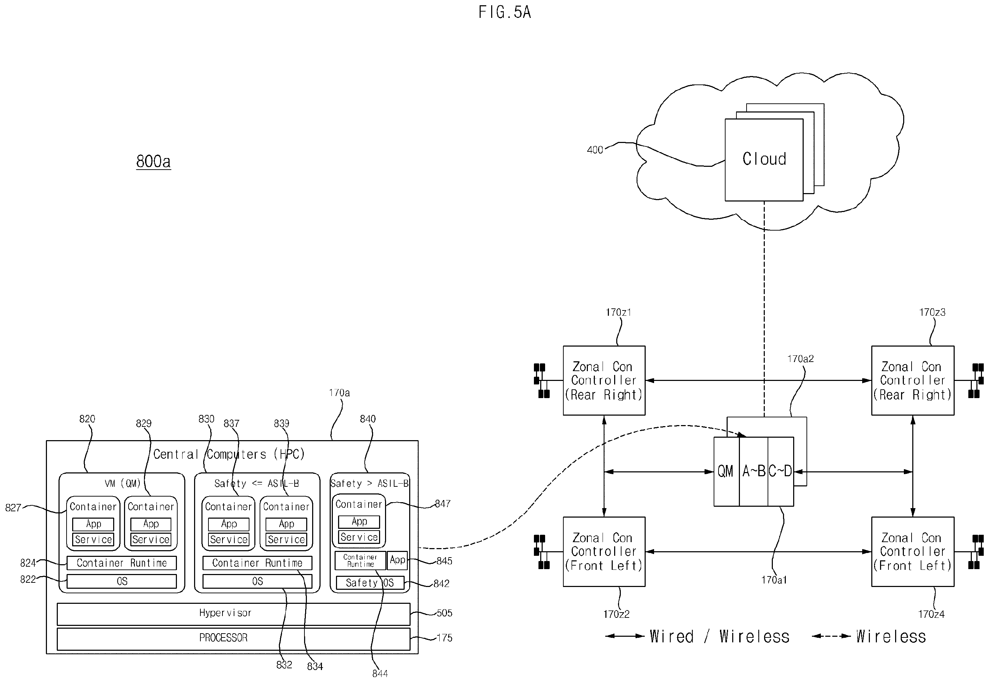

Meanwhile, the signal processing device 170 in the display apparatus 100 of FIG. 4 can be the same as signal processing devices 170, 170a1, and 170a2 of a vehicle display apparatus of FIG. 5A and subsequent figures.

FIGS. 5A to 5D are diagrams illustrating various examples of a vehicle display apparatus.

FIG. 5A is a diagram illustrating an example of a vehicle display apparatus according to an embodiment of the present disclosure.

Referring to FIG. 5A, a vehicle display apparatus 800a according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 can exchange data with the communication device 120 based on wired communication.

Meanwhile, the data received by the signal processing devices 170a1 and 170a2 can include camera data or sensor data.

For example, the vehicle internal sensor data can include at least one of vehicle wheel speed data, vehicle direction data, vehicle location data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, vehicle internal humidity data, external vehicle radar data or external vehicle lidar data.

Meanwhile, the camera data can include external vehicle camera data and vehicle internal camera data.

Meanwhile, the signal processing devices 170a1 and 170a2 can execute a plurality of virtual machines 820, 830, and 840 based on safety levels.

In the drawing, an example is illustrated in which the processor 175 in the signal processing device 170a executes the hypervisor 505, and executes first to third virtual machines 820 to 840 on the hypervisor 505 according to the Automotive Safety Integrity Level (ASIL).

The first virtual machine 820 can be a virtual machine corresponding to quality management (QM) which is the lowest risk level of the ASIL with no mandatory need.

The first virtual machine 820 can execute an operating system 822, a container runtime 824 on the operating system 822, and containers 827 and 829 on the container runtime 824.

The second virtual machine 820 can be a virtual machine corresponding to ASIL A or ASIL B with the combination of severity, exposure, and controllability values being 7 or 8.

The second virtual machine 820 can execute an operating system 832, a container runtime 834 on the operating system 832, and containers 837 and 839 on the container runtime 834.

The third virtual machine 840 can be a virtual machine corresponding to ASIL C or ASIL D with the combination of severity, exposure, and controllability values being 9 or 10.

Meanwhile, ASIL D can correspond to a grade that requires the highest level of safety.

The third virtual machine 840 can execute a safety operating system 842 and an application 845 on the operating system 842.

Meanwhile, the third virtual machine 840 can also execute the safety operating system 842, a container runtime 844 on the safety operating system 842, and a container 847 on the container runtime 844.

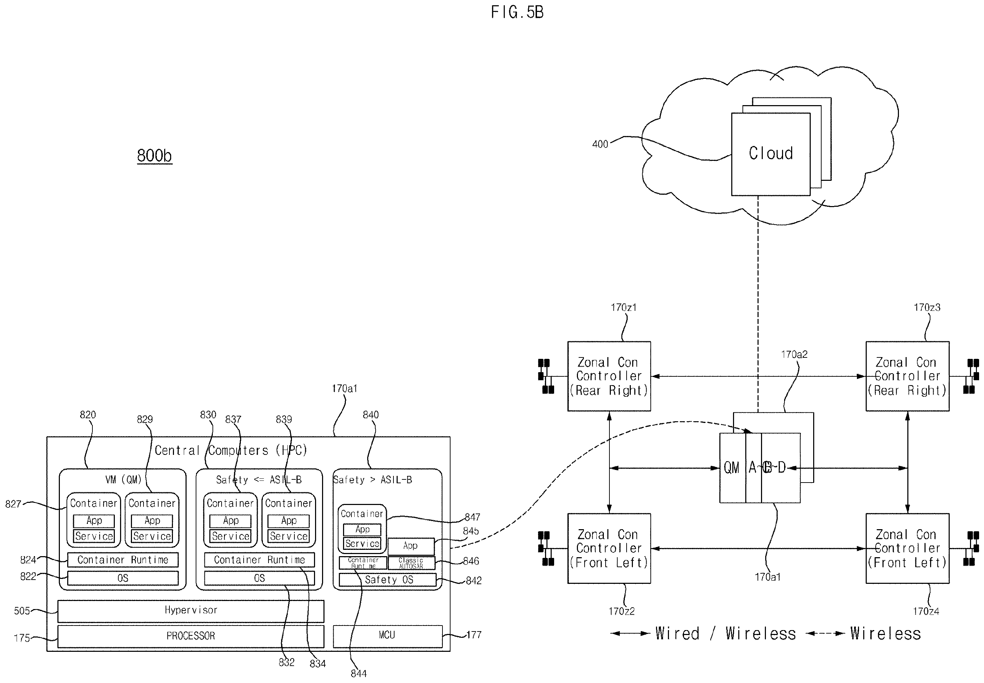

Meanwhile, unlike the drawing, the third virtual machine 840 can also be executed by a separate core, rather than by the processor 175, which will be described below with reference to FIG. 5B.

FIG. 5B is a diagram illustrating another example of a vehicle display apparatus according to an embodiment of the present disclosure.

Referring to FIG. 5B, a vehicle display apparatus 800b according to an embodiment of the present disclosure includes signal processing devices 170a1 and 170a2 and a plurality of zonal signal processing devices 170Z1 to 170Z4.

The vehicle display apparatus 800b of FIG. 5B is similar to the vehicle display apparatus 800a of FIG. 5A, with a difference being that the signal processing device 170a1 of FIG. 5B is partially different from the signal processing device 170a1 of FIG. 5A.

The following description will focus on the difference, in which the signal processing device 170a can include a processor 175 and a second processor 177.

The processor 175 in the signal processing device 170a1 executes the hypervisor 505, and executes the first and second virtual machines 820 and 830 on the hypervisor 505 according to the ASIL.

The first virtual machine 820 can execute the operating system 822, the container runtime 824 on the operating system 822, and the containers 827 and 829 on the container runtime 824.

The second virtual machine 820 can execute the operating system 832, the container runtime 834 on the operating system 832, and the containers 837 and 839 on the container runtime 834.

Meanwhile, the second processor 177 in the signal processing device 170a1 can execute the third virtual machine 840.

The third virtual machine 840 can execute the safety operating system 842, an AUTOSAR 845 on the operating system 842, and an application 845 on the AUTOSAR 845. That is, unlike FIG. 5A, the third virtual machine 840 can further execute the AUTOSAR 846 on the operating system 842.

Meanwhile, similarly to FIG. 5A, the third virtual machine 840 can also execute the safety operating system 842, the container runtime 844 on the safety operating system 842, and the container 847 on the container runtime 844.

Meanwhile, unlike the first and second virtual machines 820 and 830, the third virtual machine 840 that requires a high safety level is desirably executed by the second processor 177 that is a different core or a different processor.

Meanwhile, in the signal processing devices 170a1 and 170a2 of FIGS. 5A and 5B, if there is abnormality in the first signal processing device 170a, the second signal processing device 170a can operate which is provided for backup purposes.

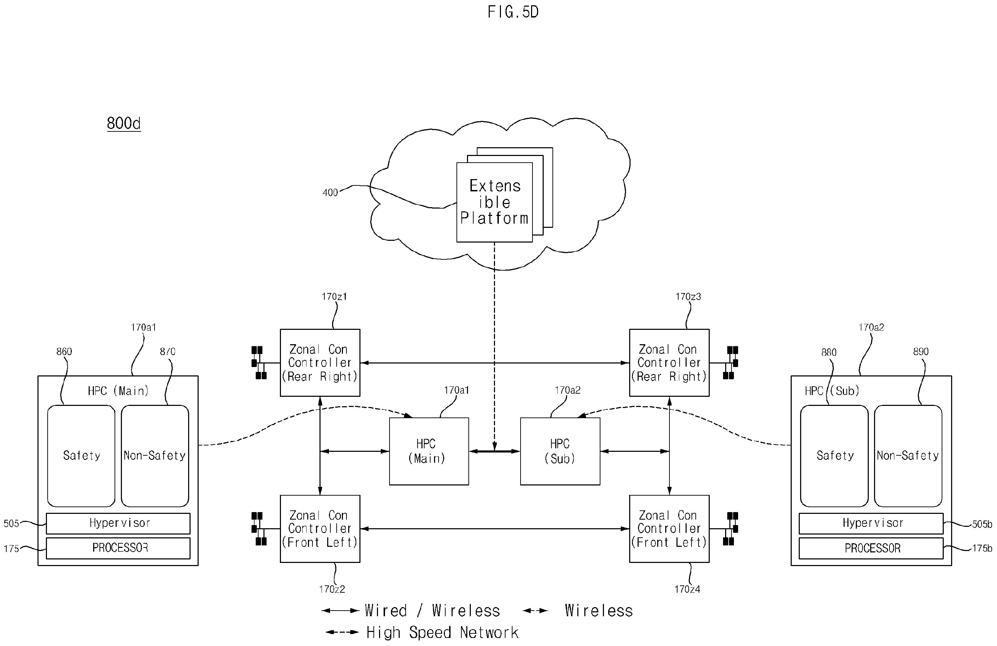

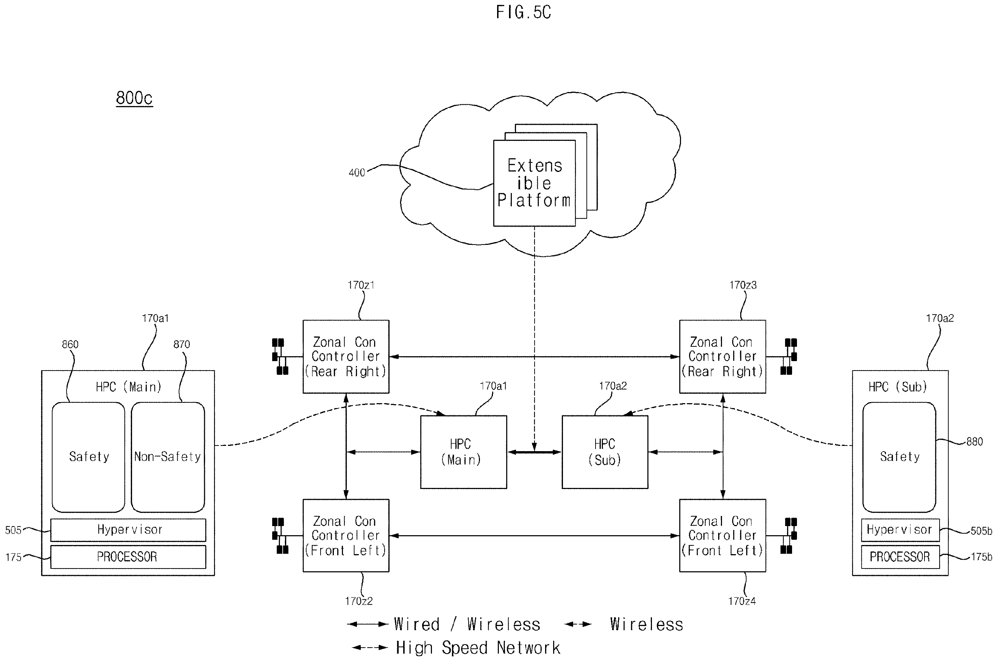

Unlike the example, the signal processing devices 170a1 and 170a2 can operate at the same time, among which the first signal processing device 170a can operate as a main device, and the second signal processing device 170a2 can operate as a sub device, which will be described below with reference to FIGS. 5C and 5D.

FIG. 5C is a diagram illustrating yet another example of a vehicle display apparatus according to an embodiment of the present disclosure.

Referring to FIG. 5C, a vehicle display apparatus 800c according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 exchange data with the communication device 120 based on wired communication.

Meanwhile, the data received by the signal processing devices 170a1 and 170a2 can include camera data or sensor data.

Meanwhile, the processor 175 in the first signal processing device 170a1 of the signal processing devices 170a1 and 170a2 can execute the hypervisor 505, and can execute each of a safety virtual machine 860 and a non-safety virtual machine 870 on the hypervisor 505.

Meanwhile, the processor 175b in the second signal processing device 170a2 of the signal processing devices 170a1 and 170a2 can execute the hypervisor 505b, and can execute only a safety virtual machine 880 on the hypervisor 505.

In the method, safety and non-safety virtual machines can be processed separately by the first signal processing device 170a1 and the second signal processing device 170a2, thereby improving stability and processing speed.

Meanwhile, high-speed network communication can be performed between the first signal processing device 170a1 and the second signal processing device 170a2.

FIG. 5D is a diagram illustrating yet another example of a vehicle display apparatus according to an embodiment of the present disclosure.

Referring to FIG. 5D, a vehicle display apparatus 800d according to an embodiment of the present disclosure includes signal processing devices 170a1 and 170a2 and a plurality of zonal signal processing devices 170Z1 to 170Z4.

The vehicle display apparatus 800d of FIG. 5D is similar to the vehicle display apparatus 800c of FIG. 5C, with a difference being that the second signal processing device 170a2 of FIG. 5D is partially different from the second signal processing device 170a2 of FIG. 5C.

The processor 175b in the second signal processing device 170a2 of FIG. 5D can execute the hypervisor 505b, and can execute each of a safety virtual machine 880 and a non-safety virtual machine 890 on the hypervisor 505.

That is, unlike FIG. 5C, there is a difference in that the processor 175b in the second signal processing device 170a2 further executes the non-safety virtual machine 890.

In the method, safety and non-safety virtual machines can be processed separately by the first signal processing device 170a1 and the second signal processing device 170a2, thereby improving stability and processing speed.

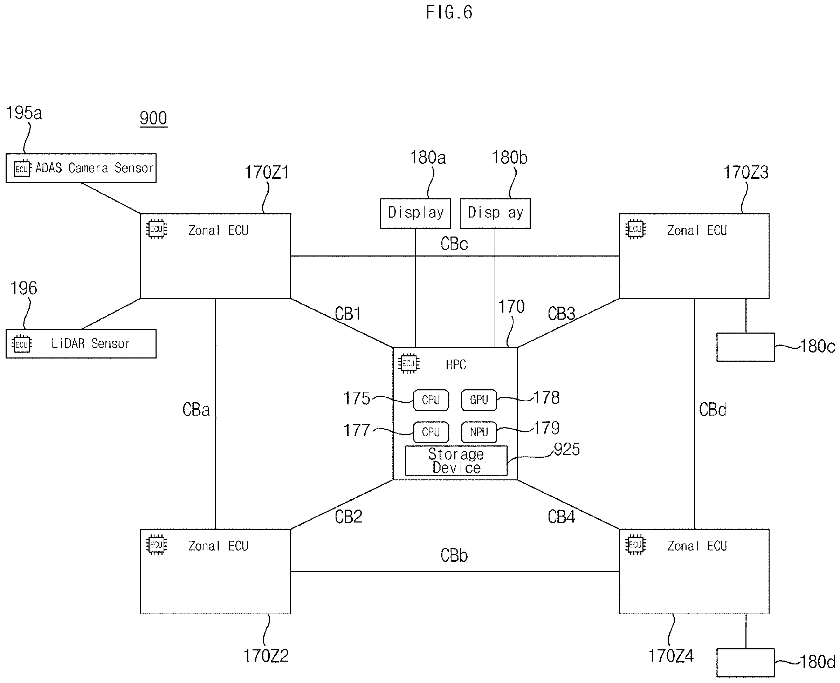

FIG. 6 is an exemplary block diagram of a vehicle display apparatus according to an embodiment of the present disclosure.

Referring to FIG. 6, a vehicle display apparatus 900 according to an embodiment of the present disclosure includes the signal processing device 170 and at least one display.

In the drawing, a cluster display 180a and an audio video navigation (AVN) display 180b are illustrated as the at least one display.

Meanwhile, the vehicle display apparatus 900 can further include the plurality of zonal signal processing devices 170Z1 to 170Z4.

In this case, the signal processing device 170 is a high-performance centralized signal processing and control device including a plurality of CPUs 175, GPUs 178, NPUs 179, etc., and can be referred to as a High Performance Computing (HPC) signal processing device or a central signal processing device.

The plurality of zonal signal processing devices 170Z1 to 170Z4 and the signal processing device 170 can be connected via wired cables CB1 to CB4.

Meanwhile, the plurality of zonal signal processing devices 170Z1 to 170Z4 can be connected via wired cables CBa to CBd.

In this case, the wired cables CBa to CBd can include CAN communication cable or Ethernet communication cable, or PCI Express cable.

Meanwhile, the signal processing device 170 according to an embodiment of the present disclosure can include at least one processor 175, 178, and 177, and a storage device 925 having a large capacity.

For example, the signal processing device 170 according to an embodiment of the present disclosure can include central processors 175 and 177, a graphic processor 178, and a neural processor 179.

Meanwhile, sensor data can be transmitted from at least one of the plurality of zonal signal processing devices 170Z1 to 170Z4 to the signal processing device 170. Particularly, the sensor data can be stored in the storage device 925 in the signal processing device 170.

In this case, the sensor data can include at least one of camera data, lidar data, radar data, vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data or vehicle internal humidity data.

In the drawing, an example is illustrated in which the camera data from the camera 195a and the lidar data from the lidar sensor 196 are input to a first zonal signal processing device 170Z1, and the camera data and the lidar data are transmitted to the signal processing device 170 via a second zonal signal processing device 170Z2 and a third zonal signal processing device 170Z3, and the like.

Meanwhile, data write speed or data read speed to write and read data to and from the storage device 925 is faster than a network speed when the sensor data is transmitted from at least one of the plurality of zonal signal processing devices 170Z1 to 170Z4 to the signal processing device 170, such that it is preferred to perform multi path routing so as to avoid bottlenecks in a network.

To this end, the signal processing device 170 according to an embodiment of the present disclosure can perform multi path routing based on Software Defined Network (SDN). Accordingly, stable network environment for data write and read operations can be ensured. Further, data can be transmitted to the storage device 925 by using multiple paths, such that data can be transmitted by dynamically changing a network configuration.

It is desirable that data communication between the plurality of zonal signal processing devices 170Z1 to 170Z4 and the signal processing device 170 in the vehicle display apparatus 900 according to an embodiment of the present disclosure is peripheral component interconnect express communication in order to provide high band and low delay communication.

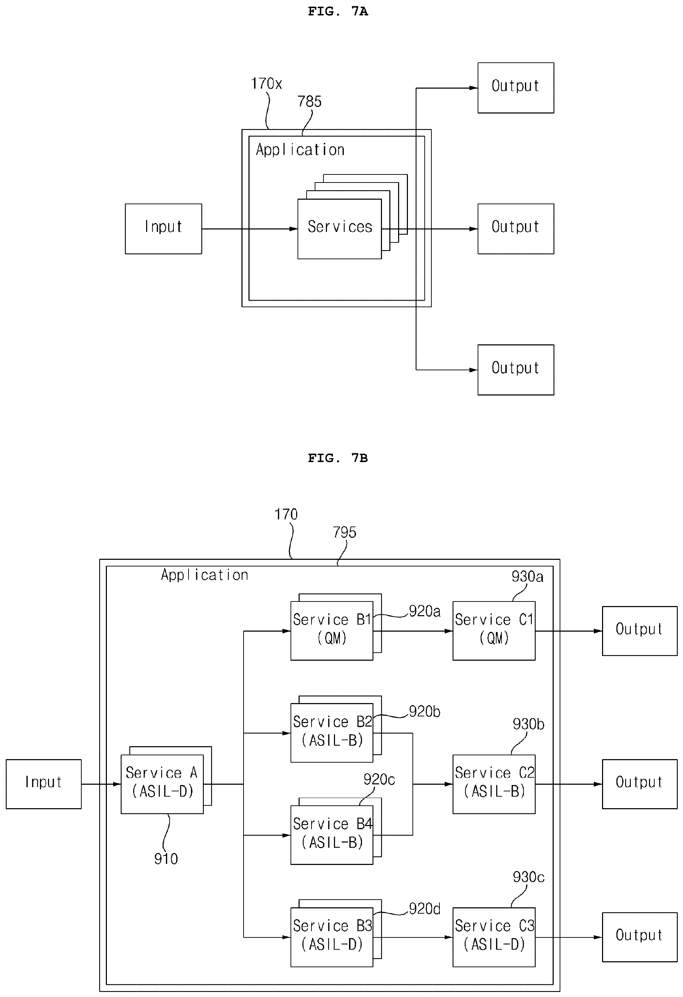

FIG. 7A is a diagram referred to in the description of a signal processing device associated with the present disclosure.

Referring to FIG. 7A, a signal processing device 170x associated with the present disclosure can execute an application 785 based on sensor data or camera data of a vehicle and the like, and can output result data through a plurality of paths.

In this method, result data of the application 785 is output only after the execution of the application 785 is complete, thereby requiring a significant amount of time and resulting in inefficiency until the execution of the application 785 is complete.

Accordingly, the present disclosure proposes a method of sharing intermediate result data and the like of an application when the application is executed.

To this end, the signal processing device 170 according to an embodiment of the present disclosure can split an application into a plurality of microservices, and can execute different microservices based on results and the like of the microservices, thereby efficiently distributing the workload.

FIG. 7B is a diagram illustrating an example of executing microservices according to an embodiment of the present disclosure.

Referring to FIG. 7B, the signal processing device 170 according to an embodiment of the present disclosure can execute an application 795 based on sensor data or camera data of a vehicle and the like.

In this case, the signal processing device 170 associated with the present disclosure can execute the application 795 by splitting the application into a plurality of microservices.

Meanwhile, the signal processing device 170 according to an embodiment of the present disclosure can execute applications or microservices by classifying the applications or microservices by safety levels.

In this case, if a sending application or microservice has a safety level higher than or equal to that of a receiving application or microservice, the signal processing device 170 according to an embodiment of the present disclosure transmits result data of the sending application or microservice.

Meanwhile, if a sending application or microservice has a lower safety level than a receiving application or microservice, the signal processing device 170 according to an embodiment of the present disclosure cannot transmit result data of the sending application or microservice.

In the drawing, an example is illustrated in which based on input data, a first microservice 910 corresponding to ASIL D which is a second safety level is executed, and result data of the first microservice 910 corresponding to ASIL D can be transmitted to each of a second microservice 920a corresponding to QM which is a third safety level, a third microservice 920b corresponding to ASIL B which is a first safety level, a fourth microservice 920c corresponding to ASIL B which is the first safety level, a fifth microservice 920d corresponding to ASIL D which is the third safety level.

The result data of the first microservice 910 can be transmitted as the safety level of the first microservice 910 is higher than the second microservice 920a, the third microservice 920b, and the fourth microservice 920c.

Meanwhile, the result data of the first microservice 910 can be transmitted as the safety level of the first microservice 910 is equal to the safety level of the fifth microservice 920d.

Then, a sixth microservice 930a, corresponding to QM which is the third safety level, is executed based on result data of the second microservice 920a, and its result data can be output through a first path.

Meanwhile, a seventh microservice 930b, corresponding to ASIL B which is the first safety level, is executed based on result data of the third microservice 920b and result data of the fourth microservice 920c, and their result data can be output through a second path.

Meanwhile, an eighth microservice 930c, corresponding to ASIL D which is the second safety level, is executed based on result data of the fifth microservice 920d, and its result data can be output through a third path.

As illustrated herein, in addition to outputting the result data of the application 795 through a plurality of paths, corresponding microservices are executed and processed through the respective paths inside the signal processing device 170 unlike FIG. 7A, such that workload can be distributed efficiently, allowing for efficient data processing.

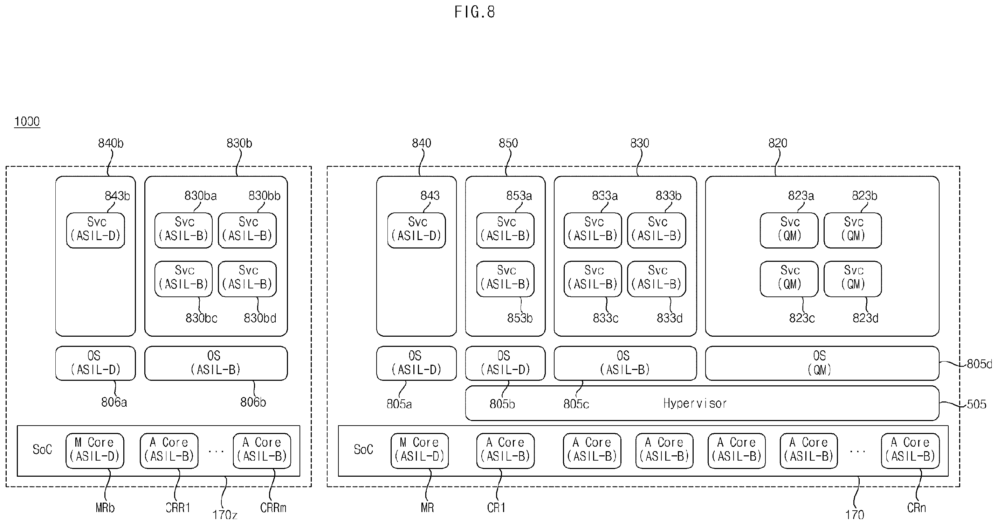

FIG. 8 is an exemplary internal block diagram of a signal processing device according to an embodiment of the present disclosure.

Referring to FIG. 8, a system 1000 according to an embodiment of the present disclosure can include a central signal processing device 170 and a zonal signal processing device 170z.

Meanwhile, the signal processing device 170 in the system 1000 according to an embodiment of the present disclosure includes a plurality of processor cores CR1 to CRn and MR.

Meanwhile, some processor cores CR1 to CRn among the plurality of processor cores CR1 to CRn and MR can correspond to processor cores in the central processor CPU of FIG. 6.

For example, some processor cores CR1 to CRn among the plurality of processor cores CR1 to CRn and MR can correspond to application processor cores in the central processor CPU of FIG. 6.

Meanwhile, some processor cores CR1 to CRn among the plurality of processor cores CR1 to CRn and MR can operate based on the hypervisor 505, and the hypervisor 505 can execute the plurality of virtual machines 820 to 850.

Meanwhile, another processor core MR among the plurality of processor cores CR1 to CRn and MR can correspond to M core or micom unit (MCU).

Meanwhile, another processor core MR among the plurality of processor cores CR1 to CRn and MR can execute an operating system 805a corresponding to the second safety level such as ASIL D, without executing the hypervisor 505, and can execute a fourth virtual machine 840 on the operating system 805a.

Meanwhile, the fourth virtual machine 840 can execute an application corresponding to the second safety level such as ASIL D or a microservice 843 corresponding to the application corresponding to the second safety level. Accordingly, the microservice 843 or the application corresponding to the second safety level can be stably executed.

Meanwhile, a first processor core CR1 among the plurality of processor cores CR1 to CRn and MR can execute the hypervisor 505, can execute the operating system 805b, corresponding to the second safety level such as ASIL D, on the hypervisor 505, and can execute the first virtual machine 850 on the operating system 805b.

Meanwhile, the first virtual machine 850 can execute an application corresponding to the first safety level such as ASIL B or microservices 853a and 853b corresponding to the application corresponding to the first safety level. Accordingly, the microservices 853a and 853b or the application corresponding to the first level safety can be stably executed.

Meanwhile, unlike the drawing, the first processor core CR1 among the plurality of processor cores CR1 to CRn and MR can execute an operating system, corresponding to the first safety level such as ASIL B, on the hypervisor 505.

Meanwhile, the second processor core CR2 and the third processor core CR3 among the plurality of processor cores CR1 to CRn and MR can execute the hypervisor 505, can execute the operating system 805c, corresponding to the first safety level such as ASIL B, on the hypervisor 505, and can execute the second virtual machine 830 on the operating system 805c.

Meanwhile, the second virtual machine 830 can execute a third application corresponding to the first safety level such as ASIL B or microservices 833a to 833d corresponding to the third application corresponding to the first safety level. Accordingly, the microservices 833a to 833d or the application corresponding to the first safety level can be stably executed.

Meanwhile, the remaining processor cores CR4 to CRn among the plurality of processor cores CR1 to CRn and MR can execute the hypervisor 505, can execute the operating system 805d, corresponding to the third safety level such as QM, on the hypervisor 505, and can execute the third virtual machine 820 on the operating system 805d.

Meanwhile, the third virtual machine 820 can execute a fourth application corresponding to the third safety level such as QM or microservices 823a to 823d corresponding to the fourth application corresponding to the third safety level, on the operating system 805d that corresponds to the third safety level lower than the first safety level. Accordingly, the microservices 823a to 823d or the application corresponding to the third safety level can be stably executed.

Meanwhile, the second signal processing device 170z can include a plurality of application processor cores CRR1 to CRRm, and an M-core MRb for executing an application corresponding to the second safety level, such as ASIL D, which is the highest level of safety.

Meanwhile, some processor cores RR1 to CRRm among the plurality of processor cores CRR1 to CRRm in the second signal processing device 170z can execute an operating system 806b corresponding to the first safety level such as ASIL B, and can execute the virtual machine 830b, corresponding to the first safety level, on the operating system 806a.

Meanwhile, the virtual machine 830b corresponding to the first safety level can execute the application corresponding to the first safety level such as ASIL B, or microservices 830ba to 830bd corresponding to the application corresponding to the first safety level. Accordingly, the microservices 830ba to 830bd or the application corresponding to the first safety level can be stably executed.

Meanwhile, another processor core MRb among the plurality of processor cores CRR1 to CRRm and MRb in the second signal processing device 170z can execute an operating system 806a corresponding to the second safety level such as ASIL D, and can execute the virtual machine 840b, corresponding to the second safety level such as ASIL D, on the operating system 806a.

Meanwhile, the virtual machine 840b corresponding to the second safety level can execute the application corresponding to the second safety level such as ASIL D, or a microservice 843b corresponding to the application corresponding to the second safety level. Accordingly, the microservice 843b or the application corresponding to the second safety level can be stably executed.

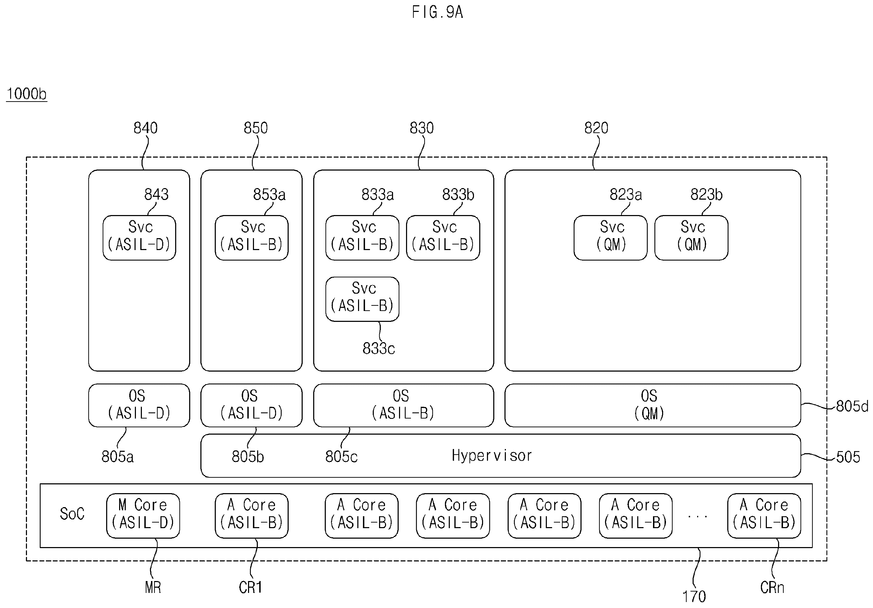

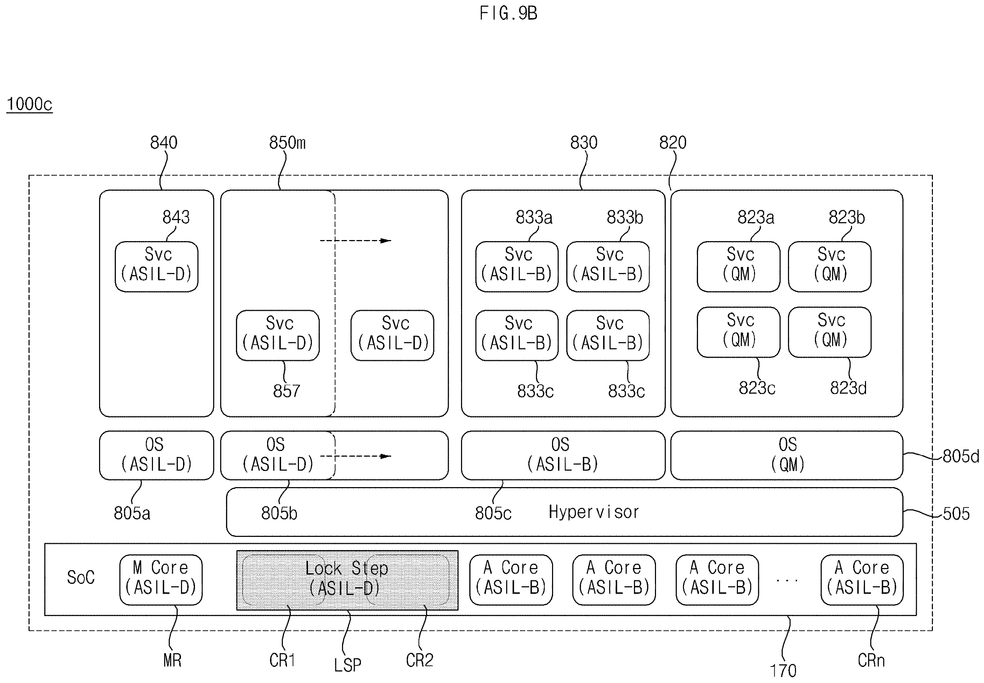

FIGS. 9A and 9B are exemplary internal block diagrams of a signal processing device before and after mode switching, according to an embodiment of the present disclosure.

FIG. 9A is an exemplary internal block diagram of a signal processing device before mode switching.

Referring to FIG. 9A, a system 1000b according to an embodiment of the present disclosure includes a central signal processing device 170.

Meanwhile, the signal processing device 170 according to an embodiment of the present disclosure includes a plurality of processor cores CR1 to CRn and MR.

Meanwhile, some processor cores CR1 to CRn among the plurality of processor cores CR1 to CRn and MR can operate based on the hypervisor 505, and the hypervisor can execute the plurality of virtual machines 820 to 850.

Meanwhile, another processor core MR among the plurality of processor cores CR1 to CRn and MR can execute an operating system 805a corresponding to the second safety level such as ASIL D, without executing the hypervisor 505, and can execute a fourth virtual machine 840 on the operating system 805a.

Meanwhile, the fourth virtual machine 840 can execute an application corresponding to the second safety level such as ASIL D or a microservice 843 corresponding to the application corresponding to the second safety level. Accordingly, the microservice 843 or the application corresponding to the second safety level can be stably executed.

Meanwhile, a first processor core CR1 among the plurality of processor cores CR1 to CRn and MR can execute the hypervisor 505, can execute the operating system 805b on the hypervisor 505, and can execute the first virtual machine 850 on the operating system 805b.

Meanwhile, the first virtual machine 850 can execute an application corresponding to the first safety level such as ASIL B or a microservice 853a corresponding to the application corresponding to the first safety level. Accordingly, the microservice 853a or the application corresponding to the first level safety can be stably executed.

Meanwhile, the second processor core CR2 and the third processor core CR3 among the plurality of processor cores CR1 to CRn and MR can execute the hypervisor 505, can execute the operating system 805c, corresponding to the first safety level such as ASIL B, on the hypervisor 505, and can execute the second virtual machine 830 on the operating system 805c.

Meanwhile, the second virtual machine 830 can execute a third application corresponding to the first safety level such as ASIL B or microservices 833a to 833c corresponding to the third application corresponding to the first safety level, on the operating system 805c corresponding to the first safety level. Accordingly, the microservices 833a to 833c or the application corresponding to the first safety level can be stably executed.

Meanwhile, the remaining processor cores CR4 to CRn among the plurality of processor cores CR1 to CRn and MR can execute the hypervisor 505, can execute the operating system 805d, corresponding to the third safety level such as QM, on the hypervisor 505, and can execute the third virtual machine 820 on the operating system 805d.

Meanwhile, the third virtual machine 820 can execute a fourth application corresponding to the third safety level such as QM or microservices 823a and 823b corresponding to the fourth application, on the operating system 805d that corresponds to the third safety level lower than the first safety level. Accordingly, the microservices 823a and 823b or the application corresponding to the third safety level can be stably executed.

FIG. 9B is an exemplary internal block diagram of a signal processing device after mode switching.

Referring to FIG. 9B, a system 1000c according to an embodiment of the present disclosure includes a plurality of processor cores CR1 to CRn and MR.

Meanwhile, a first processor core CR1 among the plurality of processor cores CR1 to CRn and MR can execute the first application corresponding to the first safety level or the microservice 853a corresponding to the first application, before mode switching as illustrated in FIG. 9A.

Meanwhile, the signal processing device 170 according to an embodiment of the present disclosure can receive a mode switching input.

In this case, the mode switching input can be a request for executing a second application corresponding to a second safety level such as ASIL D, or a microservice corresponding to the second application.

Meanwhile, redundant processor cores are required in which two or more processor cores operate rather than one processor core in order to execute the second application corresponding to the second safety level such as ASIL D, or the microservice corresponding to the second application.

Accordingly, the signal processing device 170 according to an embodiment of the present disclosure can change a setting by further using a second processor core CR2 in addition to the first processor core CR1 that operates at the first safety level, and can operate the first processor core CR1 and the second processor core CR2 in an integrated manner based on the changed setting, so that the first and second processor cores can operate at a second safety level.

The switching operation can be referred to as a lockstep operation.

That is**,** the first processor core CR1 among the plurality of processor cores CR1 to CRn and MR can execute the first application corresponding to the first safety level or the microservice 853a corresponding to the first application, and then can perform mode switching with the second processor core CR2 among the plurality of processor cores CR1 to CRn and MR, so as to execute a second application corresponding to a second safety level higher than the first safety level or a microservice 857 corresponding to the second application.

Accordingly, the safety level of the processor cores CR1 and CR2 can be increased. Further, data processing can be efficiently performed based on the increased safety level. Particularly, data processing can be efficiently performed using the microservices.

Meanwhile, the first processor core CR1 can operate based on the first safety level before mode switching, and can operate based on the second safety level after mode switching. Accordingly, data processing can be efficiently performed based on the increased safety level.

Meanwhile, after mode switching, the first processor core CR1 among the plurality of processor cores CR1 to CRn and MR can stop executing the first application corresponding to the first safety level or the microservice 853a corresponding to the first application, and can execute only the second application corresponding to the second safety level or the microservice 857 corresponding to the second application. Accordingly, data processing can be efficiently performed according to the increased safety level.

Alternatively, unlike the drawing, the first processor core CR1 among the plurality of processor cores CR1 to CRn and MR can continuously execute the first application corresponding to the first safety level or the microservice 853a corresponding to the first application, while executing the second application corresponding to the second safety level or the microservice 857 corresponding to the second application after mode switching. Accordingly, data processing can be efficiently performed.

Meanwhile, the first virtual machine 850 among the plurality of virtual machines 820 to 850 can execute the first application corresponding to the first safety level or the microservice 853a corresponding to the first application before mode switching, and in response to a request for executing the second application corresponding to the second safety level or the microservice 857 corresponding to the second application, the first virtual machine 850 can perform mode switching to switch to a virtual machine 850m corresponding to the second safety level.

That is, the first virtual machine 850m, in which the mode switching is performed, can execute the second application or the microservice 857 corresponding to the second application. Accordingly, data processing can be efficiently performed using the second application or the microservice 857 corresponding to the second application.

Meanwhile, the first virtual machine 850 among the plurality of virtual machines 820 to 850 can execute the first application or the microservice 853a corresponding to the first application on the operating system 805b corresponding to the second safety level before mode switching as illustrated in FIG. 9A, and in response to a request for executing the second application corresponding to the second safety level or the microservice 857 corresponding to the second application, the first virtual machine 850 can perform mode switching and execute the second application or the microservice 857 corresponding to the second application on the operating system 805b corresponding to the second safety level. Accordingly, data processing can be efficiently performed using the second application or the microservice 857 corresponding to the second application.

Meanwhile, unlike FIG. 9A, the first virtual machine 850 among the plurality of virtual machines 820 to 850 can execute the first application or the microservice 853a corresponding to the first application on the operating system corresponding to the first safety level before mode switching as illustrated in FIG. 9A, and in response to a request for executing the second application corresponding to the second safety level or the microservice 857 corresponding to the second application, the first virtual machine 850 can perform mode switching and execute the operating system 805b corresponding to the second safety level higher than the first safety level, and can execute the second application or the microservice 857 corresponding to the second application on the operating system 805b. Accordingly, data processing can be efficiently performed using the second application or the microservice 857 corresponding to the second application.

Meanwhile, the third processor core CR3 and the fourth processor core CR4 among the plurality of processor cores CR1 to CRn and MR can execute the hypervisor 505, can execute the operating system 805c, corresponding to the first safety level such as ASIL B, on the hypervisor 505, and can execute the second virtual machine 830 on the operating system 805c.

Meanwhile, the second virtual machine 830 can execute a third application corresponding to the first safety level such as ASIL B or microservices 833a to 833d corresponding to the third application corresponding to the first safety level, on the operating system 805c corresponding to the first safety level. Accordingly, the microservices 833a to 833d or the application corresponding to the first safety level can be stably executed.

Meanwhile, the remaining processor cores CR4 to CRn among the plurality of processor cores CR1 to CRn and MR can execute the hypervisor 505, can execute the operating system 805d, corresponding to the third safety level such as QM, on the hypervisor 505, and can execute the third virtual machine 820 on the operating system 805d.

Meanwhile, the third virtual machine 820 can execute a fourth application corresponding to the third safety level such as QM or microservices 823a to 823d corresponding to the fourth application, on the operating system 805d that corresponds to the third safety level lower than the first safety level. Accordingly, the microservices 823a to 823d or the application corresponding to the third safety level can be stably executed.

FIG. 10 is a flowchart illustrating a method of operating a signal processing device according to an embodiment of the present disclosure.

Referring to FIG. 10, the signal processing device 170 can identify an installation location for each safety level based on a subscription service (S1010).

For example, in response to the subscription service being an application or a microservice, the signal processing device 170 can identify an installation location or an execution location for each safety level of an already running application or microservice.

Specifically, in response to the subscription service being an application, the signal processing device 170 can check whether a safety level of the subscription service is ASIL B which is a first safety level, or ASIL D which is a second safety level, or QM which is a third safety level.

Meanwhile, the signal processing device 170 can check whether a subscription service can be installed therein (S1015).

For example, in the case in which the subscription service is an application corresponding to ASIL D which is the second safety level or a microservice corresponding to ASIL D which is the second safety level, the signal processing device 170 can verify whether there is a processor core operating at ASIL D which is the second safety level or whether there is a virtual machine operating at ASIL D which is the second safety level.

In another example, in the case in which the subscription service is an application corresponding to ASIL B which is the first safety level or a microservice corresponding to ASIL B which is the first safety level, the signal processing device 170 can verify whether there is a processor core operating at ASIL B which is the first safety level or whether there is a virtual machine operating at ASIL B which is the first safety level.

Meanwhile, if the subscription service can be installed therein, the signal processing device 170 can download an application or microservice, corresponding to the subscription service, from an external server (not shown) and the like and can install the application or microservice (S1040).

Then, the signal processing device 170 can execute the installed application corresponding to the subscription service (S1045).

For example, in the case in which the subscription service is an application corresponding to ASIL B which is the first safety level or a microservice corresponding to ASIL B which is the first safety level, the signal processing device 170 can install and execute an application corresponding to ASIL B which is the first safety level or a microservice corresponding to ASIL B which is the first safety level, in the first virtual machine 850 or the second virtual machine 820.

Meanwhile, in operation 1015 (S1015), in the case in which the subscription service is an application corresponding to ASIL D which is the second safety level or a microservice corresponding to ASIL D which is the second safety level, and there is no processor core operating at ASIL D which is the second safety level, the signal processing device 170 can determine that the application or microservice is installable and determine whether the setting of a processor core can be changed (S1018).

Meanwhile, in the case in which the setting of the processor core can be changed, the signal processing device 170 can determine whether a safety level of a virtual machine executed in the processor core can be changed (S1020).

Meanwhile, in the case in which the safety level of the virtual machine can be changed, the signal processing device 170 can change a lockstep setting of the processor core (S1025), and can change the setting of the processor core (S1030).

For example, in the case in which the subscription service is an application corresponding to ASIL D which is the second safety level or a microservice corresponding to ASIL D which is the second safety level, the signal processing device 170 can change the settings of the first processor core CR1 and the second processor core CR2 that operate at ASIL B which is the first safety level, so that the first processor core CR1 and the second processor core CR2 can operate at ASIL D which is the second safety level.

Then, after changing the settings, the signal processing device 170 can restart the system (S1033), and can reconfirm whether installation is possible (S1035).

Upon determining that installation is possible in operation 1035, the signal processing device 170 can immediately download an application or microservice, corresponding to the subscription service, from an external server (not shown) and the like and install the application or microservice (S1040), and can execute the installed application corresponding to the subscription service (S1045).

For example, in the case in which the subscription service is an application corresponding to ASIL D which is the second safety level or a microservice corresponding to ASIL D which is the second safety level, the signal processing device 170 can install and execute the application corresponding to ASIL D which is the second safety level or the microservice corresponding to ASIL D which is the second safety level, in the first virtual machine 850m in which mode switching is performed, as illustrated in FIG. 9B.

Accordingly, the safety level of the processor core can be increased. Further, data processing can be efficiently performed based on the increased safety level. Particularly, data processing can be efficiently performed using the microservice.

By applying the description of FIG. 10 to FIGS. 9A and 9B, the first processor core CR1 among the plurality of processor cores CR1 to CRn and MR can execute the first application corresponding to the first safety level or the microservice corresponding to the first application, and in response to a request for installing and executing the second application or the microservice corresponding to the second application, the first processor core CR1 can perform mode switching, change the setting, and upon restarting, install and execute the second application or the microservice 857 corresponding to the second application.

Accordingly, data processing can be efficiently performed using the second application or the microservice corresponding to the second application.

Operation can be performed in the order from before the mode switching in FIG. 9A to after the mode switching in FIG. 9B, or vice versa.

That is, operation can also be performed in the order from after the mode switching in FIG. 9B to before the mode switching in FIG. 9A.

That is, in response to a request for uninstalling the second application or the microservice corresponding to the second application, the first processor core CR1 among the plurality of processor cores CR1 to CRn and MR can restart after uninstalling the second application or the microservice corresponding to the second application. Accordingly, the safety level of the processor core can be decreased.

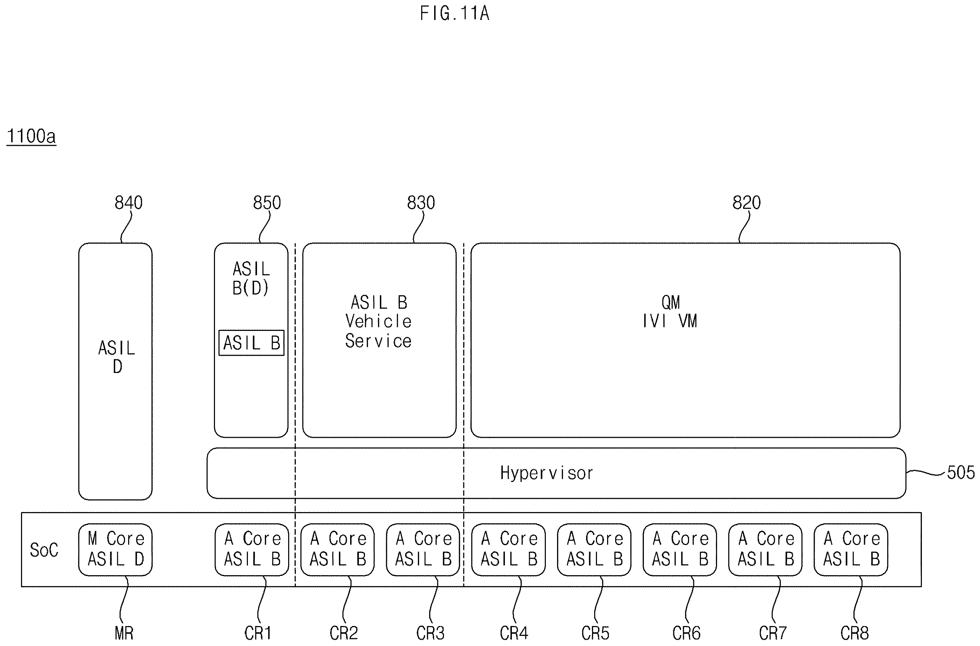

FIGS. 11A to 21 are diagrams referred to in the description of operation of FIG. 10.

FIG. 11A is an internal block diagram illustrating another example of a signal processing device before mode switching.

Referring to FIG. 11A, a signal processing device 170 in a system 1100a according to another embodiment of the present disclosure includes a plurality of processor cores CR1 to CRn and MR.

Meanwhile, some processor cores CR1 to CRn among the plurality of processor cores CR1 to CRn and MR can operate based on the hypervisor 505, and the hypervisor can execute the plurality of virtual machines 820 to 850.

Before mode switching, the first virtual machine 850 can be executed on the first processor core CR1 and can execute an application or microservice corresponding to the first safety level such as ASIL B.

Meanwhile, the second virtual machine 830 can be executed on the second processor core CR2 and the third processor core CR3 and can execute an application or microservice corresponding to the first safety level such as ASIL B.

Meanwhile, the third virtual machine 820 can be executed on fourth to eighth processor cores CR4 to CR8 and can execute an application or microservice corresponding to the third safety level such as QM.

Meanwhile, the fourth virtual machine 840 can be executed on an M core MR and can execute an application or microservice corresponding to the second safety level such as ASIL D.

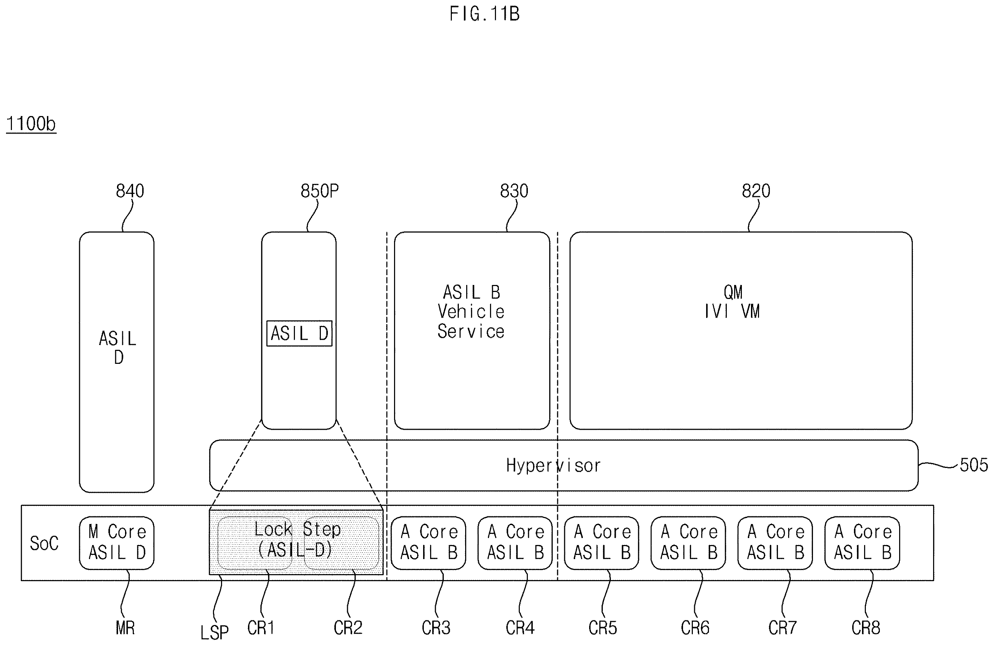

FIG. 11B is an internal block diagram illustrating another example of a signal processing device after mode switching.

Referring to FIG. 11B, a signal processing device 170 in a system 1100b according to an embodiment of the present disclosure includes a plurality of processor cores CR1 to CRn and MR.

Meanwhile, in response to the mode switching, safety levels of the first processor core CR1 and the second processor core CR2 can be increased, such that settings of the first processor core CR1 and the second processor core CR2 can be changed to operate at the second safety level such as ASIL D.

Meanwhile, a first virtual machine 850P, in which the mode switching is performed, can be executed on the first processor core CR1 and the second processor core CR2, and can execute an application or microservice corresponding to the second safety level such as ASIL D.

Meanwhile, in response to the mode switching, the second virtual machine 830 can be executed on the third processor core CR3 and the fourth processor core CR4 unlike FIG. 11A, and can execute an application or microservice corresponding to the first safety level such as ASIL B.

Meanwhile, in response to the mode switching, the third virtual machine 820 can be executed on the fifth to eighth processor cores CR5 to CR8 unlike FIG. 11A, and can execute an application or microservice corresponding to the third safety level such as QM.

That is, in comparison with FIG. 11A, the third virtual machine 820 can be executed on four processor cores, rather than five processor cores.

Meanwhile, even after the mode switching is performed, the fourth virtual machine 840 can be executed on the M core MR in the same manner as in FIG. 11A, and can execute an application or microservice corresponding to the second safety level such as ASIL D.

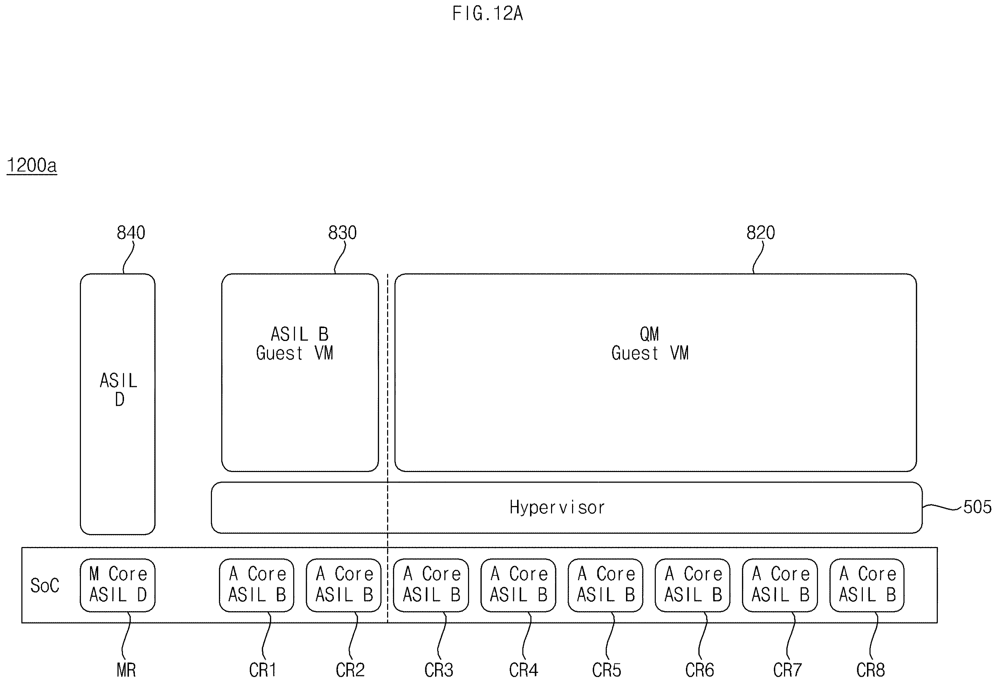

FIG. 12A is an internal block diagram illustrating yet another example of a signal processing device before mode switching.

Referring to FIG. 12A, a signal processing device 170 in a system 1200a according to another embodiment of the present disclosure includes a plurality of processor cores CR1 to CRn and MR.

Meanwhile, some processor cores CR1 to CRn among the plurality of processor cores CR1 to CRn and MR can operate based on the hypervisor 505, and the hypervisor can execute the plurality of virtual machines 820 to 850.

Unlike FIG. 11A, the first virtual machine cannot be executed before mode switching.

Meanwhile, the second virtual machine 830 can be executed on the first processor core CR1 and the second processor core CR2 and can execute an application or microservice corresponding to the first safety level such as ASIL B.

Meanwhile, the third virtual machine 820 can be executed on the third to eighth processor cores CR3 to CR8 and can execute an application or microservice corresponding to the third safety level such as QM.

Meanwhile, the fourth virtual machine 840 can be executed on the M core MR and can execute an application or microservice corresponding to the second safety level such as ASIL D.

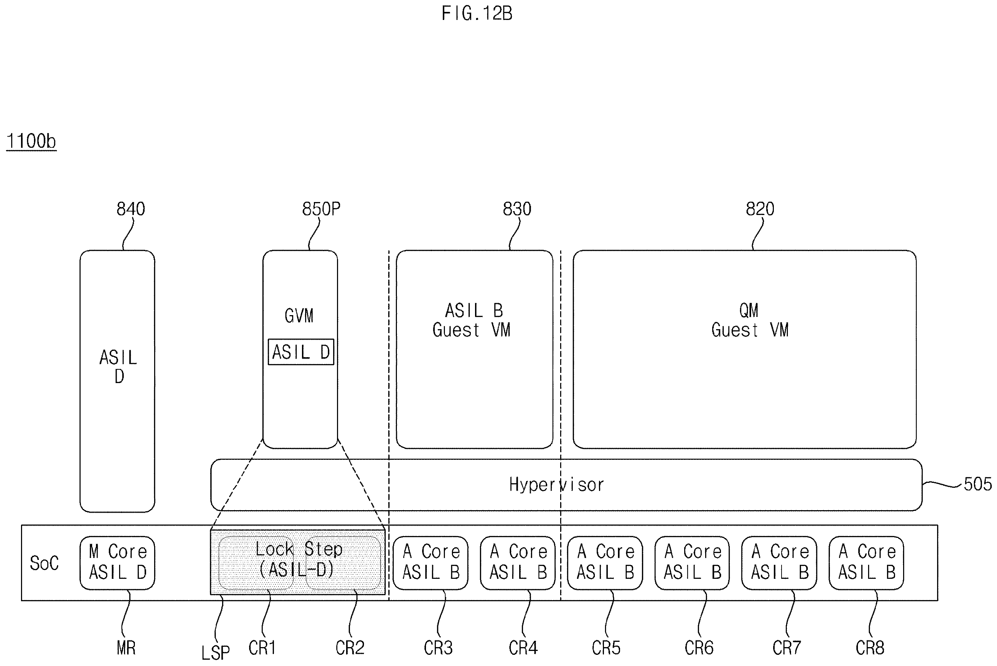

FIG. 12B is an internal block diagram illustrating yet another example of a signal processing device after mode switching.

Referring to FIG. 12B, a signal processing device 170 in a system 1200b according to an embodiment of the present disclosure includes a plurality of processor cores CR1 to CRn and MR.

Meanwhile, in response to the mode switching, safety levels of the first processor core CR1 and the second processor core CR2 can be increased, such that settings of the first processor core CR1 and the second processor core CR2 can be changed to operate at the second safety level such as ASIL D.

Meanwhile, in response to the mode switching, the first virtual machine 850P can be newly executed.

That is, in response to the mode switching, the first virtual machine 850P can be executed on the first processor core CR1 and the second processor core CR2 and can execute an application or microservice corresponding to the second safety level such as ASIL D.

Meanwhile, in response to the mode switching, the second virtual machine 830 can be executed on the third processor core CR3 and the fourth processor core CR4 unlike FIG. 12A, and can execute an application or microservice corresponding to the first safety level such as ASIL B.

Meanwhile, in response to the mode switching, the third virtual machine 820 can be executed on the fifth to eighth processor cores CR5 to CR8 unlike FIG. 12A, and can execute an application or microservice corresponding to the third safety level such as QM.

That is, in comparison with FIG. 12A, the third virtual machine 820 can be executed on four processor cores, rather than six processor cores.

Meanwhile, even after the mode switching, the fourth virtual machine 840 can be executed on the M core MR in the same manner as in FIG. 12A, and can execute an application or microservice corresponding to the second safety level such as ASIL D.

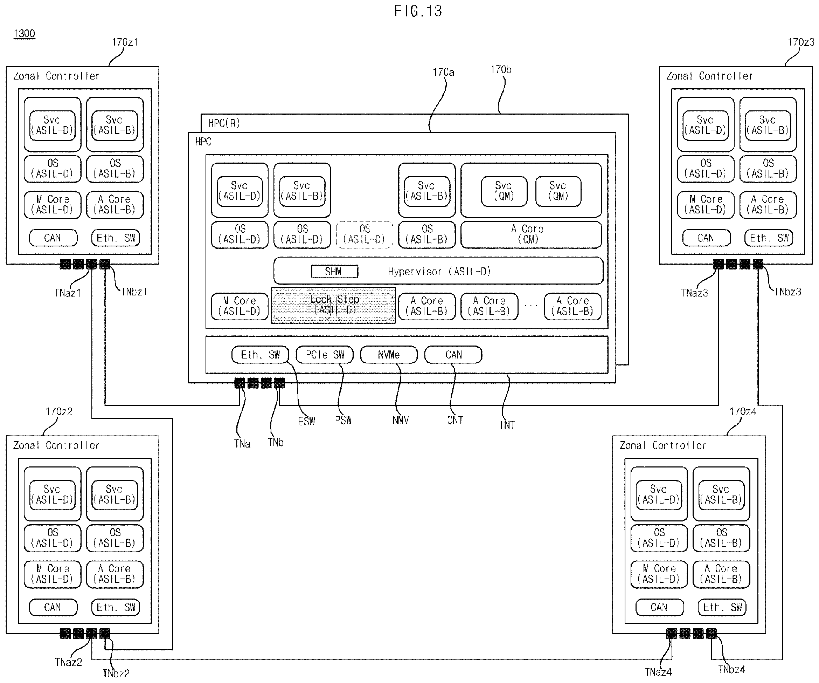

FIG. 13 is a diagram illustrating a vehicle display apparatus including a plurality of signal processing devices.

Referring to FIG. 13, a vehicle display apparatus 1300 including the plurality of signal processing devices includes a first central signal processing device 170a, a second central signal processing device 170b, and a plurality of zonal signal processing devices 170z1 to 170z4.

The first central signal processing device 170a or the second central signal processing device 170b can include an interface INT to exchange data with the plurality of processor cores CR1 to CRn and MR and at least one of the plurality of zonal signal processing devices 170z1 to 170z4.

For example, when the first processor core CR1 performs mode switching, the interface INT can transmit mode switching information to at least one zonal signal processing device 170z.

In the drawing, an example is illustrated in which mode switching is performed in the first processor core CR1 and the second processor core CR2 among the plurality of processor cores CR1 to CRn and MR in the first central signal processing device 170a, so that safety levels of the first and second processor cores can be increased.

Meanwhile, the first processor core CR1 and the second processor core CR2, in which mode switching is performed, can execute the second application corresponding to the second safety level or the microservice corresponding to the second application.

Meanwhile, the interface INT can transmit result data of the microservice corresponding to the second application to a processor core, having a safety level lower than or equal to the second safety level, in the first zonal signal processing device 170z1.

That is, the first central signal processing device 170a or the second central signal processing device 170b can transmit result data of some microservices, among a plurality of microservices of the second application, to a processor core having a safety level lower than or equal to the second safety level in the first zonal signal processing device 170z1, and can process the result data. Accordingly, data processing can be efficiently performed using the zonal signal processing device 170z.

Meanwhile, the interface INT can receive result data of a microservice executed in the first zonal signal processing device 170z1 having a safety level higher than the second safety level, and can transmit the result data to the first processor core CR1.

Accordingly, the first processor core CR1 can execute a subsequent microservice based on the result data of the microservice executed in the first zonal signal processing device 170z1. As a result, data processing can be efficiently performed using the first zonal signal processing device 170z1.

Meanwhile, the interface INT can include an Ethernet switch (ESW), a PCIe switch (PSW), an nVMe interface (NMV), a CAN communication interface (CNT), etc., in order to exchange data with the plurality of zonal signal processing devices 170z1 to 170z4.

Meanwhile, a first terminal Tna of the first central signal processing device 170a can be electrically connected to a first terminal TNbz1 of the first zonal signal processing device 170z1, and a second terminal TNaz1 of the first zonal signal processing device 170z1 can be electrically connected to a first terminal TNbz2 of the second zonal signal processing device 170z2.

Meanwhile, a second terminal TNaz2 of the second zonal signal processing device 170z2 can be electrically connected to a first terminal TNaz4 of the fourth zonal signal processing device 170z4, and a second terminal TNbz4 of the fourth zonal signal processing device 170z4 can be electrically connected to a first terminal TNbz3 of the third zonal signal processing device 170z3.

Meanwhile, a second terminal TNaz3 of the third zonal signal processing device 170z3 can be electrically connected to a second terminal Tnb of the first central signal processing device 170a.

Meanwhile, data exchange between the plurality of zonal signal processing devices 170z1 to 170z4 and the first central signal processing device 170a or the second central signal processing device 170b can be performed through Ethernet communication using the Ethernet switch (ESW) or PCIe communication using the PCIe switch (PSW).

Meanwhile, Ethernet communication or communication using a shared memory can be performed for communication between the virtual machines in the first central signal processing device 170a or the second central signal processing device 170b.

Meanwhile, IPC communication can be performed for communication between processors or processor cores in the first central signal processing device 170a or the second central signal processing device 170b.

Meanwhile, Ethernet communication or communication using a shared memory can be performed for communication between the zonal signal processing devices 170z1 to 170z4.

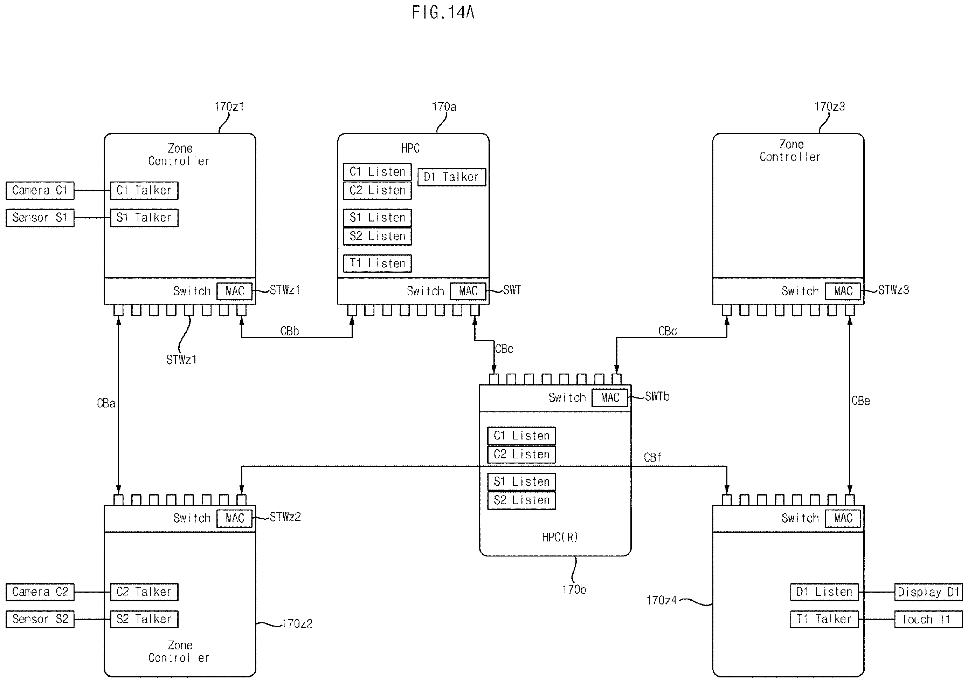

FIG. 14A is a diagram illustrating a communication network with a ring between the plurality of signal processing devices of FIG. 13.

Referring to FIG. 14A, the first zonal signal processing device 170z1 and the second zonal signal processing device 170z2 can be connected by a first cable CBa, and the first zonal signal processing device 170z1 and the first central signal processing device 170a can be connected by a second cable CBb, and the first central signal processing device 170a and the second central signal processing device 170b can be connected by a third cable CBc.

Meanwhile, the second central signal processing device 170b and the third zonal signal processing device 170z3 can be connected by a fourth cable CBd, and the third zonal signal processing device 170z3 and the fourth zonal signal processing device 170z4 can be connected by a fifth cable CBe, and the fourth zonal signal processing device 170z4 and the second zonal signal processing device 170z2 can be connected by a sixth cable CBf.

Accordingly, the plurality of signal processing devices 170z1 to 170z4 and 170a and 170b can be connected in a ring structure, and Ethernet communication can be performed between the plurality of signal processing devices 170z1 to 170z4 and 170a and 170b.

Particularly, the respective signal processing devices 170z1 to 170z4 and 170a and 170b include network switches STWz1 to STWz4 and STW and STWb, such that Ethernet communication can be performed between the plurality of signal processing devices 170z1 to 170z4 and 170a and 170b.

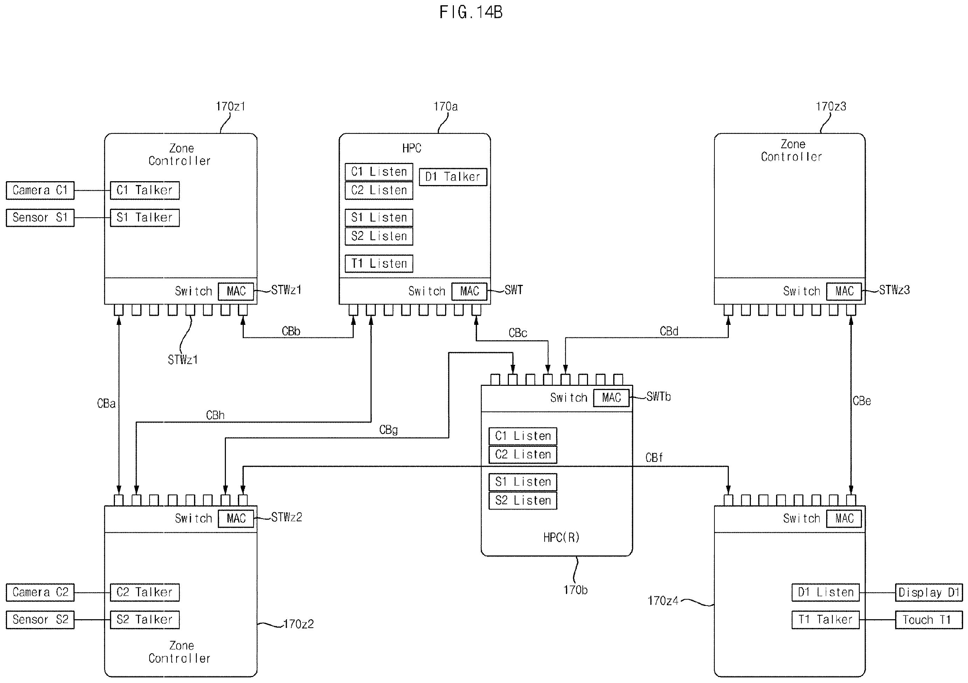

FIG. 14B is a diagram illustrating a communication network with a mesh between the plurality of signal processing devices of FIG. 13.

Referring to FIG. 14B, in addition to the plurality of cables CBa to CBf of FIG. 14A, a plurality of cables CBg and CBh can be further disposed between the plurality of signal processing devices 170z1 to 170z4 and 170a and 170b.

That is, the second central signal processing device 170b and the second zonal signal processing device 170z2 can be connected by a seventh cable CBg, and the second zonal signal processing device 170z2 and the first central signal processing device 170a can be connected by an eighth cable CBh.

Meanwhile, the respective signal processing devices 170z1 to 170z4 and 170a and 170b include network switches STWz1 to STWz4 and STW and STWb, such that Ethernet communication can be performed between the plurality of signal processing devices 170z1 to 170z4 and 170a and 170b.

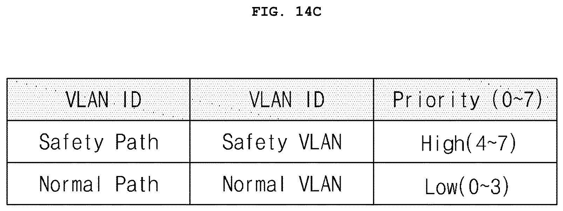

FIG. 14C is a diagram illustrating an example of performing communication separately through Normal Path and Safety Path.

Referring to FIG. 14C, the respective signal processing devices 170z1 to 170z4 and 170a and 170b of FIG. 14A or FIG. 14B are divided into Normal Path corresponding to Normal VLAN and Safety Path corresponding to Safety VLAN, and safety data, such as ASIL D which is the second safety level, can be transmitted separately from the Normal Path based on VLAN settings.

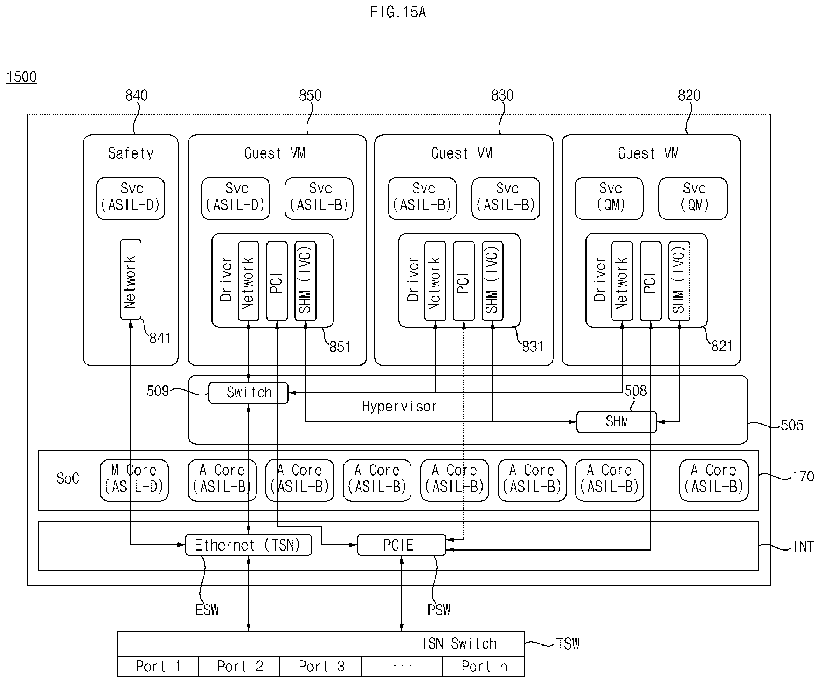

FIG. 15A is a diagram illustrating an example of communication between the signal processing device 170 and an external switch TSW.

Referring to FIG. 15A, the signal processing device 170 can include the plurality of processor cores CR1 to CRn and MR, and the interface INT.

IPC communication between the M core MR and the application processor cores CR1 to CRn among the plurality of processor cores CR1 to CRn and MR can be performed using an internal system bus.

Meanwhile, communication using the shared memory 508 in the hypervisor 505 can be performed between the plurality of virtual machines 820 to 850.

Meanwhile, Ethernet communication using the Ethernet switch ESW or PCIe communication using the PCIe switch can be performed between the signal processing device 170 and the external switch TSW.

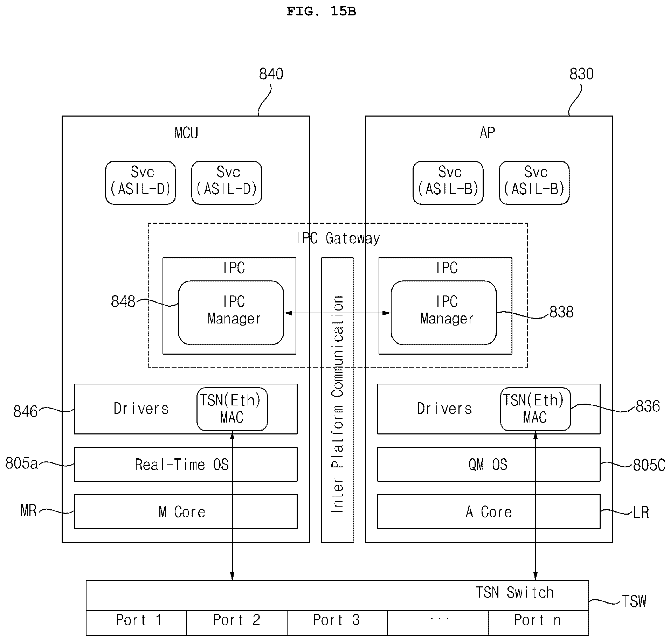

FIG. 15B is a diagram illustrating an example of communication between the M core MR and the application processor core LR in the signal processing device.

Referring to FIG. 15B, the fourth virtual machine 840 executed on the M core MR can be executed on the real time operating system 805a and the driver 846.

Meanwhile, the second virtual machine 850 executed on the application processor core LR can be executed on the operating system 805c corresponding to the third safety level, and the driver 836.

Meanwhile, the respective drivers 836 and 846 can perform Ethernet communication with the external switch TSW.

Meanwhile, the application processor core LR and the M core MR can execute the IPC managers 83 and 848, respectively, to perform IPC communication.

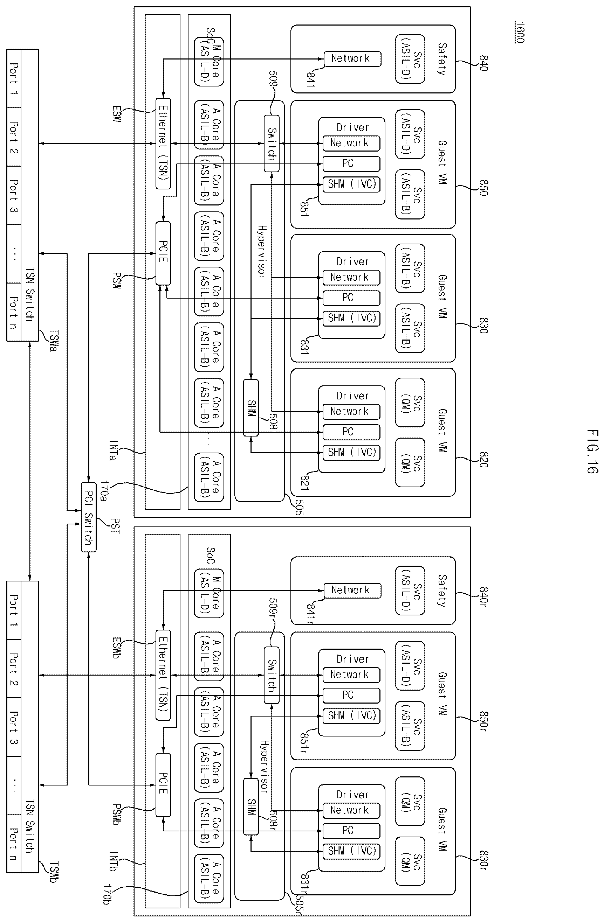

FIG. 16 is a diagram illustrating an example of communication between the first central signal processing device 170a and the second central signal processing device 170b.

Referring to FIG. 16, the first central signal processing device 170a can include a plurality of processor cores and an interface INTa, and can execute the plurality of virtual machines 820 to 850 on the plurality of processor cores.

Meanwhile, the first central signal processing device 170a can include the plurality of processor cores and the interface, and can execute the hypervisor 505 on the plurality of processor cores and execute the plurality of virtual machines 820 to 850 on the hypervisor 505.

Meanwhile, the respective virtual machines 820 to 850 can include network interfaces or drivers 821, 831, 841, and 851, and can perform Ethernet communication with an external switch TSWa by using the Ethernet switch ESW in the interface INTa or can perform PCIe communication with an external PCIe switch PST by using the PCIe switch PSW in the interface INTa.

Meanwhile, the second central signal processing device 170b can include a plurality of processor cores and an interface INTb, and can execute a plurality of virtual machines 830r to 850r on the plurality of processor cores.

Meanwhile, the second central signal processing device 170b can include the plurality of processor cores and the interface, and can execute a hypervisor 505r on the plurality of processor cores and execute the plurality of virtual machines 830r to 850r on the hypervisor 505r.

Meanwhile, the respective virtual machines 830r to 850r can include network interfaces or drivers 83r1, 841r, and 851r, and can perform Ethernet communication with an external switch TSWb by using the Ethernet switch ESWb in the interface INTb or can perform PCIe communication with an external PCIe switch PST by using the PCIe switch PSWb in the interface INTb.

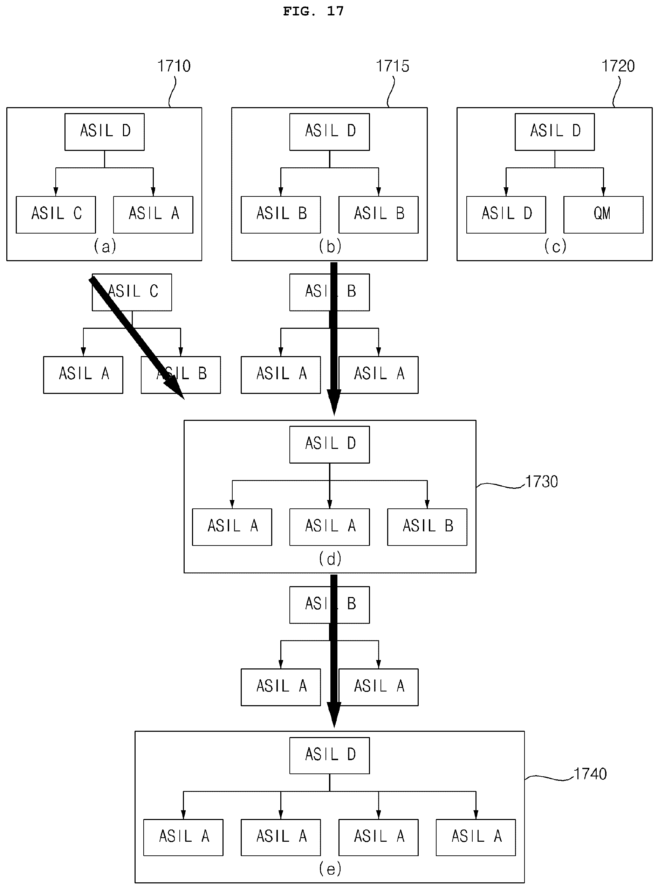

FIG. 17 is a diagram illustrating a policy of decomposing safety levels.

Referring to FIG. 17, the signal processing device 170 can split a first application 1710 corresponding to ASIL D which is the highest safety level into a microservice of ASIL C and a microservice of ASIL A.

Meanwhile, the signal processing device 170 can split the microservice corresponding to ASIL C into a microservice of ASIL A and a microservice of ASIL B.

Meanwhile, the signal processing device 170 can split a second application 1715 corresponding to ASIL D which is the highest safety level into a microservice of ASIL B and a microservice of ASIL B.

Meanwhile, the signal processing device 170 can split the microservice of ASIL B into a microservice of ASIL A and a microservice of ASIL A.

Meanwhile, the signal processing device 170 can split a third application 1720 corresponding to ASIL D which is the highest safety level into a microservice of ASIL D and a microservice of QM.

Meanwhile, the signal processing device 170 can split a fourth application 1730 corresponding to ASIL D which is the highest safety level into a microservice of ASIL A, a microservice of ASIL A, and a microservice of ASIL B.

In this case, the microservice of ASIL A, the microservice of ASIL A, and the microservice of ASIL B can be microservices based on the first application 1710 and the second application 1715.

Meanwhile, the signal processing device 170 can split the microservice of ASIL B in the fourth application 1710 into a microservice of ASIL A and a microservice of ASIL A.

Meanwhile, the signal processing device 170 can split a fifth application 1740 corresponding to ASIL D which is the highest safety level into a microservice of ASIL A, a microservice of ASIL A, a microservice of ASIL A, and a microservice of ASIL A.

In this case, the four ASIL-A microservices can be microservices based on the fourth application 1710.

Referring to FIG. 17, safety levels can decrease in the order of ASIL D, ASIL C, ASIL B, ASIL A, and QM.

Meanwhile, four ASIL-A microservices or two ASIL-B microservices can correspond to one ASIL-D microservice.

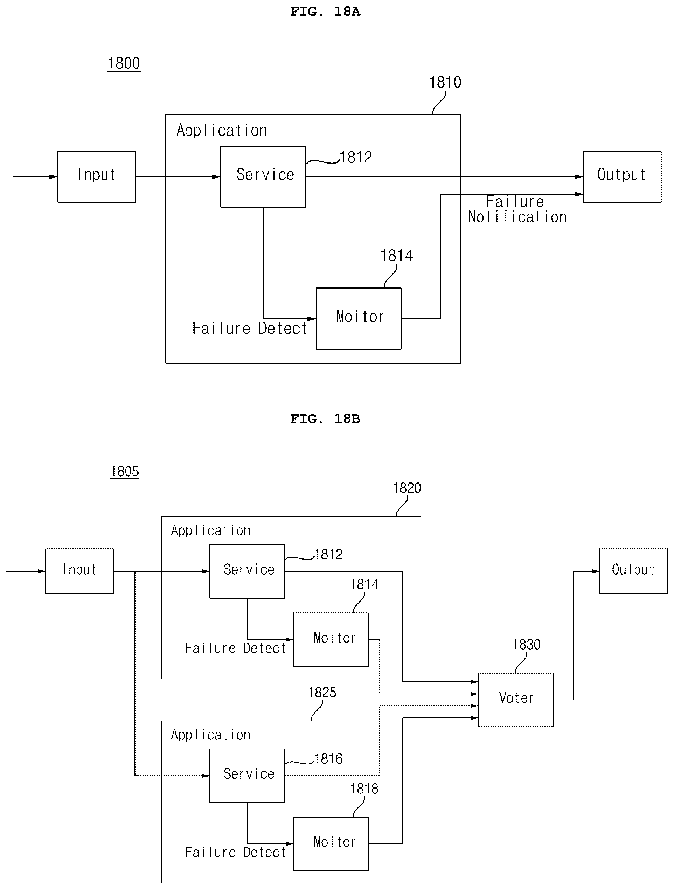

FIG. 18A is a diagram referred to in the description of operation of ASIL B which is the first safety level.

Referring to FIG. 18A, when executing an application 1810 or microservice corresponding to ASIL B which is the first safety level, the signal processing device 170 can execute a service 1812, detect an error, and process the detected error.

For example, the signal processing device 170 can verify whether telltale output displayed on the first display 180a is the same as a CAN signal based on ASIL B which is the first safety level, and if the telltale output is different from the CAN signal, the signal processing device 170 can output the telltale again based on the CAN signal.

FIG. 18B is a diagram referred to in the description of operation of ASIL D which is the second safety level.

Referring to FIG. 18B, when executing an application or microservice corresponding to ASIL D which is the second safety level and the highest safety level, the signal processing device 170 can perform redundant processing of data in order to detect an error.

To this end, when executing a first application 1820 or microservice corresponding to ASIL D which is the second safety level, the signal processing device 170 can execute the first service 1812 and detect an error through a first monitor 1814.

In addition, when executing a second application 1825 or microservice corresponding to ASIL D which is the second safety level, the signal processing device 170 can execute a second service 1816 and detect an error through a second monitor 1818.

Then, a voter in the signal processing device 170 can compare a result of the first monitor 1814 with a result of the second monitor 1818, to detect a final error and perform a recovery function, so as to return to a normal operation state.

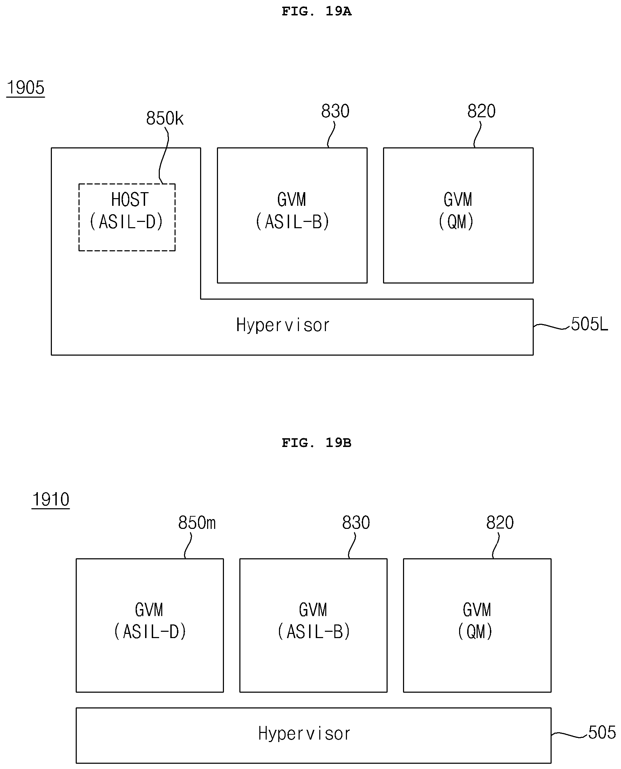

FIG. 19A is a diagram illustrating an example of a type 1 hypervisor executed in the signal processing device 170.

Referring to FIG. 19A, the signal processing device 170 in a system 1905 according to an embodiment of the present disclosure includes a plurality of processor cores CR1 to CRn and MR.

Meanwhile, the first processor core CR1 among the plurality of processor cores CR1 to CRn and MR can execute the hypervisor 505, and the hypervisor 505 can execute an application 850k or microservice corresponding to the second safety level.

Meanwhile, the hypervisor 505 can execute a plurality of virtual machines 820 and 830 on the hypervisor 505. Accordingly, data processing can be efficiently performed using the plurality of virtual machines 820 and 830.

Meanwhile, the plurality of virtual machines 820 and 830 can be the virtual machine 830 corresponding to ASIL B which is the first safety level, and the virtual machine 820 corresponding to QM which is the third safety level.

The hypervisor 505 of FIG. 19A can be referred to as an L type hypervisor.

FIG. 19B is a diagram illustrating an example of a type 2 hypervisor executed in the signal processing device 170.

Referring to FIG. 19B, the signal processing device 170 in a system 1910 according to an embodiment of the present disclosure includes a plurality of processor cores CR1 to CRn and MR.

Meanwhile, the first processor core CR1 among the plurality of processor cores CR1 to CRn and MR can execute the hypervisor 505, and the hypervisor 505 can execute a plurality of virtual machines 820, 830, and 850m on the hypervisor 505. Accordingly, data processing can be efficiently performed using the plurality of virtual machines 820 and 830.

Meanwhile, the plurality of virtual machines 820, 830, and 850m can be the virtual machine 850m corresponding to ASIL D which is the second safety level, the virtual machine 830 corresponding to ASIL B which is the first safety level, and the virtual machine 820 corresponding to QM which is the third safety level.

The hypervisor 505 of FIG. 19B can be referred to as a separate type hypervisor.

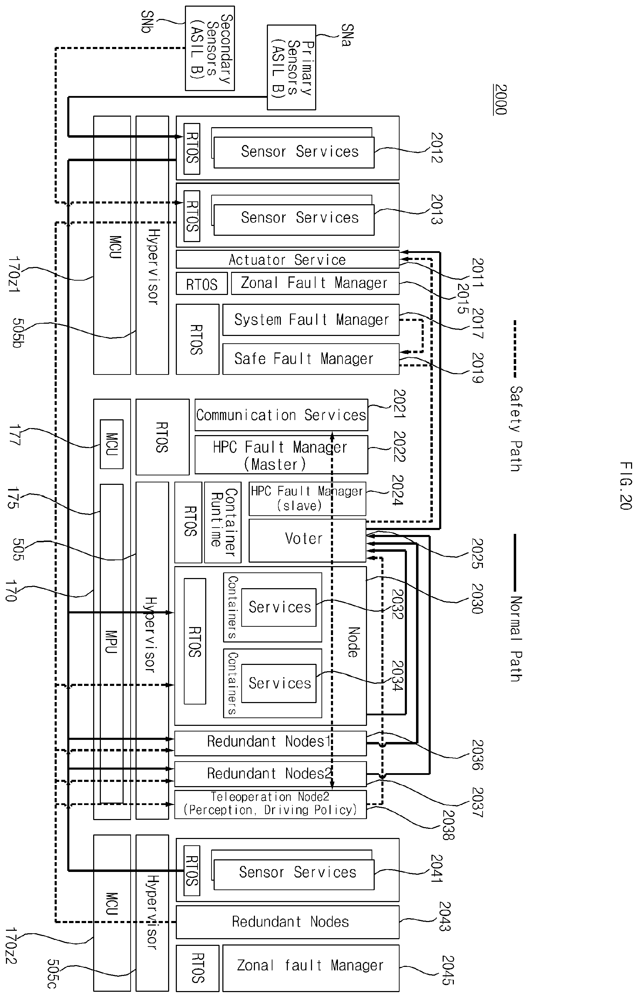

FIG. 20 is a block diagram illustrating another example of a vehicle display apparatus according to an embodiment of the present disclosure.

Referring to FIG. 20, a vehicle display apparatus 2000 according to an embodiment of the present disclosure includes a central signal processing device 170 and a plurality of zonal signal processing devices 170z1 and 170z2.

Meanwhile, the central signal processing device 170 can include a processor 175 including an application processor core, and a second processor 177 including an M core.

Meanwhile, the second processor 177 can execute a real time operating system (RTOS), and can execute communication services 2121 and a fault manager 2022 on the RTOS.

Meanwhile, the processor 175 can execute the hypervisor 505, execute the RTOS on a part of the hypervisor 505, execute a container runtime on the RTOS, and execute a fault manager 2024 and a voter 2025 on the container runtime.

Meanwhile, the processor 175 can execute the RTOS on another part of the hypervisor 505 and execute a node 2030, including containers 2032 and 2034, on the RTOS.

Meanwhile, the processor 175 can execute a redundant node 1 2036, a redundant node 2 2037, and a teleoperation node 2038 on yet another part of the hypervisor 505.

Meanwhile, the first zonal signal processing device 170z1 can include a processor.

Meanwhile, the first zonal signal processing device 170z1 can execute a hypervisor 505b, can execute the RTOS on another part of the hypervisor 505b, and can execute sensor services 2012 and 2013 on the RTOS.

Meanwhile, the first zonal signal processing device 170z1 can execute an actuator service 2011.

Meanwhile, the first zonal signal processing device 170z1 can execute the RTOS on another part of the hypervisor 505b, and can execute a fault manager 2015 on the RTOS.

Meanwhile, the first zonal signal processing device 170z1 can execute the RTOS on yet another part of the hypervisor 505b, and can execute a system fault manager 2017 and a safe fault manager 2019 on the RTOS.

Meanwhile, a first sensor service 2012 can receive sensor data from a first sensor device SNa through a normal path, and can transmit the received sensor data to the central signal processing device 170 and the second zonal signal processing device 170z2 through the normal path.

Meanwhile, a second sensor service 2013 can receive sensor data from a second sensor device SNb through a safety path, and can transmit the received sensor data to the central signal processing device 170 and the second zonal signal processing device 170z2 through the safety path.

Meanwhile, the second zonal signal processing device 170z2 can include a processor.

Meanwhile, the second zonal signal processing device 170z2 can execute a hypervisor 505c, can execute the RTOS on another part of the hypervisor 505c, and can execute a sensor service 2041 on the RTOS.

Meanwhile, the second zonal signal processing device 170z2 can execute a redundant node 2044.

Meanwhile, the second zonal signal processing device 170z2 can execute the RTOS on another part of the hypervisor 505c, and can execute a fault manager 2045 on the RTOS.

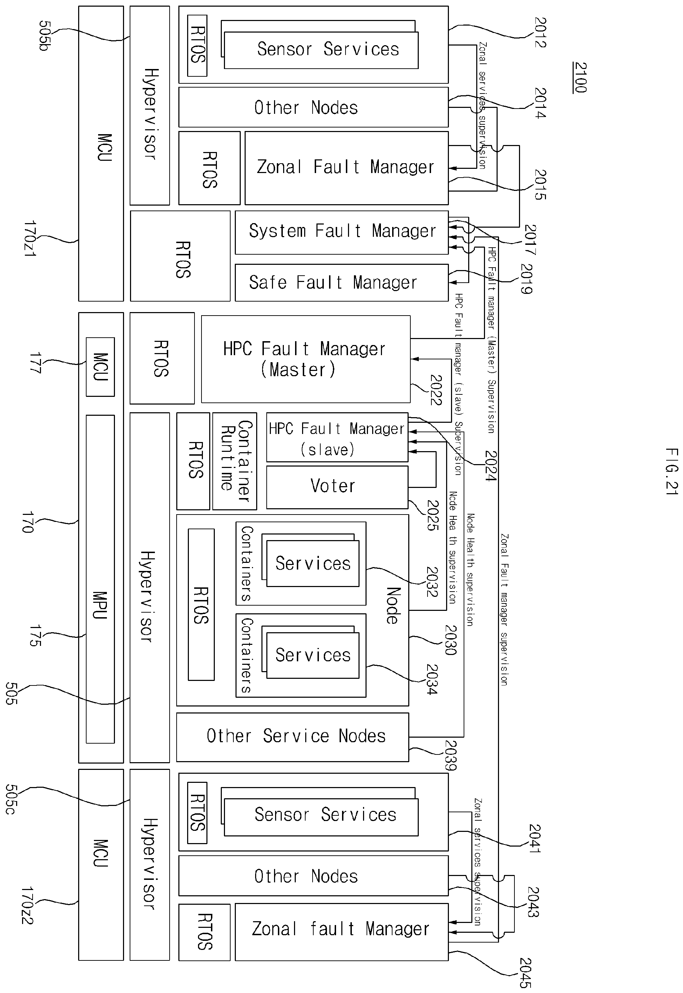

FIG. 21 is a block diagram illustrating yet another example of a vehicle display apparatus according to an embodiment of the present disclosure.

Referring to FIG. 21, a vehicle display apparatus 2100 according to an embodiment of the present disclosure includes a central signal processing device 170 and a plurality of zonal signal processing devices 170z1 and 170z2.

Meanwhile, the central signal processing device 170 can include a processor 175 including an application processor core, and a second processor 177 including an M core.

Meanwhile, the second processor 177 can execute a real time operating system (RTOS), and can execute a fault manager 2022 on the RTOS.

Meanwhile, the processor 175 can execute the hypervisor 505, execute the RTOS on a part of the hypervisor 505, execute a container runtime on the RTOS, and execute a fault manager 2024 and a voter 2025 on the container runtime.

Meanwhile, the processor 175 can execute the RTOS on another part of the hypervisor 505 and can execute a node 2030, including containers 2032 and 2034, on the RTOS.

Meanwhile, the processor 175 can execute another service node 203 on yet another part of the hypervisor 505.

Meanwhile, the first zonal signal processing device 170z1 can execute a hypervisor 505b, execute the RTOS on a part of the hypervisor 505b, and execute a sensor service 2012 on the RTOS.

Meanwhile, the first zonal signal processing device 170z1 can execute another node 2014 on another part of the hypervisor 505.

Meanwhile, the first zonal signal processing device 170z1 can execute the RTOS on yet another part of the hypervisor 505b, and can execute a fault manager 2015 on the RTOS.

Meanwhile, the first zonal signal processing device 170z1 can execute the RTOS on yet another part of the hypervisor 505b, and can execute a system fault manager 2017 and a safe fault manager 2019 on the RTOS.

Meanwhile, the second zonal signal processing device 170z2 can execute a hypervisor 505c, execute the RTOS on a part of the hypervisor 505c, and execute a sensor service 2041 on the RTOS.

Meanwhile, the second zonal signal processing device 170z2 can execute another node 2043 on another part of the hypervisor 505b.

Meanwhile, the second zonal signal processing device 170z2 can execute the RTOS on yet another part of the hypervisor 505c, and can execute a fault manager 2045 on the RTOS.

Meanwhile, in response to a fault occurring in the central signal processing device 170, a slave fault manager 2024 receives fault information, and the slave fault manager 2024 can transmit the fault information to a master fault manager 2022.

Meanwhile, the master fault manager 2022 can transmit the fault information of the central signal processing device 170 to a system fault manager 2019 in the first zonal signal processing device 170z1.

Meanwhile, the zonal fault manager 2015 in the first zonal signal processing device 170z1 can receive the fault information from the sensor service 2012 and can transmit the fault information to the system fault manager 2019.

Meanwhile, the zonal fault manager 2045 in the second zonal signal processing device 170z2 can receive the fault information from the sensor service 2041 and can transmit the fault information to the system fault manager 2019 in the first zonal signal processing device 170z1.

Accordingly, the system fault manager 2019 in the first zonal signal processing device 170z1 can integrate and manage the fault information.

Meanwhile, unlike the drawing, the system fault manager 2019 can also be included in the central signal processing device 170, rather than in the zonal signal processing device 170z1.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising a plurality of processor cores,
wherein a first processor core among the plurality of processor cores is configured to execute a first application corresponding to a first safety level or a microservice corresponding to the first application, perform mode switching with a second processor core among the plurality of processor cores, and execute a second application corresponding to a second safety level higher than the first safety level or a microservice corresponding to the second application.

2. The signal processing device of claim 1, wherein the first processor core is configured to operate based on the first safety level before the mode switching, and to operate based on the second safety level after the mode switching.

3. The signal processing device of claim 1, wherein after the mode switching, the first processor core among the plurality of processor cores is configured to continuously execute the first application corresponding to the first safety level or the microservice corresponding to the first application.

4. The signal processing device of claim 1, wherein after the mode switching, the first processor core among the plurality of processor cores is configured to stop executing the first application corresponding to the first safety level or the microservice corresponding to the first application.

5. The signal processing device of claim 1, wherein some of the plurality of processor cores are configured to operate based on a hypervisor,
wherein the hypervisor is configured to execute a plurality of virtual machines.

6. The signal processing device of claim 5, wherein a first virtual machine among the plurality of virtual machines is configured to execute the first application corresponding to the first safety level or the microservice corresponding to the first application before the mode switching, and
werein in response to a request for executing the second application corresponding to the second safety level or the microservice corresponding to the second application, the first virtual machine is configured to perform mode switching and execute the second application or the microservice corresponding to the second application.

7. The signal processing device of claim 5, wherein a first virtual machine among the plurality of virtual machines is configured to execute the first application or the microservice corresponding to the first application on an operating system corresponding to the second safety level before the mode switching, and
wherein in response to a request for executing the second application corresponding to the second safety level or the microservice corresponding to the second application, the first virtual machine is configured to perform mode switching and execute the second application or the microservice corresponding to the second application on the operating system corresponding to the second safety level.

8. The signal processing device of claim 5, wherein a second virtual machine among the plurality of virtual machines is configured to execute a third application corresponding to the first safety level or a microservice corresponding to the third application on an operating system corresponding to the first safety level.

9. The signal processing device of claim 5, wherein a third virtual machine among the plurality of virtual machines is configured to execute, on an operating system corresponding to a third safety level lower than the first safety level, a fourth application corresponding to the third safety level or a microservice corresponding to the fourth application.

10. The signal processing device of claim 5, wherein another processor core among the plurality of processor cores is configured to execute an application corresponding to the second safety level or a microservice corresponding to the application corresponding to the second safety level, without executing the hypervisor.

11. The signal processing device of claim 1, wherein the first processor core among the plurality of processor cores is configured to execute the first application corresponding to the first safety level or the microservice corresponding to the first application, and
wherein in response to a request for installing and executing the second application or the microservice corresponding to the second application, the first processor core is configured to perform mode switching, change a setting, and upon restarting, install and execute the second application or the microservice corresponding to the second application.

12. The signal processing device of claim 1, wherein in response to a request for uninstalling the second application or the microservice corresponding to the second application, the first processor core among the plurality of processor cores is configured to restart after uninstalling the second application or the microservice corresponding to the second application.

13. The signal processing device of claim 1, further comprising an interface configured to transmit mode switching information of the first processor core to at least one zonal signal processing device.

14. The signal processing device of claim 13, wherein the interface is configured to transmit result data of the microservice corresponding to the second application to a processor core, having a safety level lower than or equal to the second safety level, in a first zonal signal processing device.

15. The signal processing device of claim 13, wherein the interface is configured to receive result data of a microservice corresponding to a safety level higher than or equal to the second safety level, which is executed in the first zonal signal processing device, and to transmit the result data to the first processor core.

16. The signal processing device of claim 1, wherein the first processor core among the plurality of processor cores is configured to execute a hypervisor,
wherein the hypervisor is configured to execute an application or microservice corresponding to the second safety level, and to execute the plurality of virtual machines on the hypervisor.

17. The signal processing device of claim 1, wherein the first processor core among the plurality of processor cores is configured to execute a hypervisor,
wherein the hypervisor is configured to execute the plurality of virtual machines on the hypervisor.

18. A signal processing device comprising a plurality of processor cores,
wherein at least some of the plurality of processor cores are configured to execute a hypervisor,
wherein the hypervisor is configured to execute a plurality of virtual machines,
wherein a first virtual machine among the plurality of virtual machines is configured to execute a first application corresponding to a first safety level or a microservice corresponding to the first application before mode switching, and
wherein in response to a request for executing a second application corresponding to a second safety level higher than the first safety level or a microservice corresponding to the second application, the first virtual machine is configured to perform the mode switching and execute the second application or the microservice corresponding to the second application.

19. The signal processing device of claim 18, wherein in response to a request for installing and executing the second application or the microservice corresponding to the second application, the first virtual machine is configured to perform the mode switching, change a setting, and upon restarting, install and execute the second application or the microservice corresponding to the second application.

20. A vehicle display apparatus comprising:
at least one display; and
a signal processing device configured to output an image signal to the display,
wherein the signal processing device comprises the signal processing device of any one of claims 1 to 19**.**
